# EUROPÄISCHE PATENTANMELDUNG

(11) **EP 4 693 633 A1**
(43) Veröffentlichungstag der Anmeldung: **11.02.2026**
(21) Anmeldenummer: 24205942.6
(22) Anmeldetag: 10.10.2024
(51) Int. Cl.: H01M 50/107, H01M 50/152, H01M 50/159, H01M 50/167, H01M 50/169, H01M 50/184, H01M 50/474, H01M 50/477, H01M 50/483, H01M 50/528, H01M 50/536, H01M 50/559, H01M 50/566

(54) **HERSTELLUNGSVERFAHREN, ENERGIESPEICHERELEMENT UND DECKELBAUGRUPPE**

(30) Priorität: 07.08.2024 WO PCT/EP2024/072349
(71) Anmelder: VARTA Microbattery GmbH, 73479 Ellwangen Jagst (DE)
(72) Erfinder: Drews, Verena, 89537 Giengen (DE); Frank, Waldemar, 73479 Ellwangen (DE); Geiger, Michael, 73479 Ellwangen (DE); Kieninger, Dominik, 73492 Rainau (DE)
(74) Vertreter: Ostertag & Partner Patentanwälte mbB

(57) **Zusammenfassung**

Zur Herstellung eines Energiespeicherelements (100) werden
• ein Elektroden-Separator-Verbund (104) mit der Sequenz Anode (105) / Separator (156) / Kathode (108), der eine erste endständige Stirnseite (104a) und eine zweite endständige Stirnseite (104b) aufweist, bereitgestellt,
• ein Kontaktblechteil (112) auf eine der Stirnseiten aufgebracht,
• gegebenenfalls ein Distanzausgleichsblechteil (177) auf das Kontaktblechteil aufgeschweißt oder auf dem Kontaktblechteil mittels Bildung einer alternativen stoffschlüssigen Verbindung oder einer formschlüssigen Verbindung fixiert,
• der Elektroden-Separator-Verbund (104) in ein Gehäuseteil (101), das eine endständige kreisförmige Öffnung aufweist, insbesondere in einen metallischen Gehäusebecher, eingebracht,
• die kreisförmige Öffnung des Gehäuseteils (101) mittels eines Deckels (102) unter Ausbildung eines geschlossenen Gehäuses geschlossen, wobei der Deckel (102) eine erste Seite (102b) aufweist, die nach dem Schließen ins Innere des Gehäuses weist, und eine zweite Seite (102c), die nach außen weist, und
• der Deckel (102) an das Kontaktblechteil (112) oder an das Distanzausgleichsblechteil (177) angeschweißt.

Es wird die Verwendung eines Deckels vorgeschlagen, der mindestens ein Loch (119) aufweist. Dieses ermöglicht beim Anschweißen des Deckels (102) einen Druckausgleich zwischen den beiden Seiten des Deckels (102).

Beschrieben werden neben der Herstellung des Energiespeicherelements auch das Energiespeicherelement selbst sowie eine bevorzugte Deckelbaugruppe (112).

## Beschreibung

Die nachstehend beschriebene Erfindung betrifft ein Herstellungsverfahren, ein Energiespeicherelement, und eine Deckelbaugruppe.

Elektrochemische Energiespeicherelemente sind dazu in der Lage, gespeicherte chemische Energie durch eine Redoxreaktion in elektrische Energie umzuwandeln. Die einfachste Form eines elektrochemischen Energiespeicherelements ist die elektrochemische Zelle. Sie umfasst eine positive und eine negative Elektrode, zwischen denen ein Separator angeordnet ist. Bei einer Entladung werden an der negativen Elektrode durch einen Oxidationsprozess Elektronen freigesetzt. Hieraus resultiert ein Elektronenstrom, der von einem externen elektrischen Verbraucher abgegriffen werden kann, für den die elektrochemische Zelle als Energielieferant dient. Zugleich kommt es zu einem der Elektrodenreaktion entsprechenden lonenstrom innerhalb der Zelle. Dieser lonenstrom durchquert den Separator und wird durch einen ionenleitenden Elektrolyten ermöglicht. Der Separator verhindert somit einen unmittelbaren Kontakt der Elektroden. Gleichzeitig ermöglicht er aber einen elektrischen Ladungsausgleich zwischen den Elektroden.

Wenn die Entladung reversibel ist, also die Möglichkeit besteht, die bei der Entladung erfolgte Umwandlung von chemischer Energie in elektrische Energie wieder umzukehren und die Zelle wieder zu laden, spricht man von einer sekundären Zelle. Die bei sekundären Zellen allgemein übliche Bezeichnung der negativen Elektrode als Anode und die Bezeichnung der positiven Elektrode als Kathode bezieht sich auf die Entladefunktion der elektrochemischen Zelle.

Ein elektrochemisches Energiespeicherelement kann genau eine elektrochemische Energiespeicherzelle umfassen. Es kann aber auch zwei oder mehr Zellen umfassen, die bevorzugt elektrisch in Reihe oder elektrisch parallel geschaltet sind.

Für viele Anwendungen werden als Energiespeicherelemente heute sekundäre Lithium-Ionen-Zellen eingesetzt, da diese hohe Ströme bereitstellen können und sich durch eine vergleichsweise hohe Energiedichte auszeichnen. Sie basieren auf dem Einsatz von Lithium, welches in Form von Ionen zwischen den Elektroden der Zelle hin und her wandern kann. Die negative Elektrode und die positive Elektrode einer Lithium-Ionen-Zelle werden in der Regel von sogenannten Kompositelektroden gebildet, die neben elektrochemisch aktiven Komponenten auch elektrochemisch inaktive Komponenten umfassen.

Als elektrochemisch aktive Komponenten (Aktivmaterialien) für sekundäre Lithium-Ionen-Zellen kommen prinzipiell sämtliche Materialien in Frage, die Lithium-Ionen aufnehmen und wieder abgeben können. Für die negative Elektrode werden hierfür beispielsweise Partikel auf Kohlenstoffbasis, wie beispielsweise graphitischer Kohlenstoff, eingesetzt. Als Aktivmaterialien für die positive Elektrode können beispielsweise Lithiumcobaltoxid (LiCoO₂), Lithiummanganoxid (LiMn₂O₄), Lithiumeisenphosphat (LiFePO₄) oder Derivate hiervon eingesetzt werden. Die elektrochemisch aktiven Materialien sind in der Regel in Partikelform in den Elektroden enthalten.

Als elektrochemisch inaktive Komponenten umfassen die Kompositelektroden im Allgemeinen einen flächigen und/oder bandförmigen Stromkollektor, beispielsweise eine metallische Folie, der als Träger für das jeweilige Aktivmaterial dient. In der Regel sind Stromkollektoren mit dünnen Schichten aus den jeweiligen Aktivmaterialien beschichtet. Der Stromkollektor für die negative Elektrode (Anodenstromkollektor) kann beispielsweise aus Kupfer oder Nickel und der Stromkollektor für die positive Elektrode (Kathodenstromkollektor) beispielsweise aus Aluminium gebildet sein.

Weiterhin können die Elektroden als elektrochemisch inaktive Komponenten einen Elektrodenbinder (z. B. Polyvinylidenfluorid (PVDF) oder ein anderes Polymer, beispielsweise Carboxymethylzellulose), leitfähigkeitsverbessernde Additive und andere Zusätze umfassen. Der Elektrodenbinder gewährleistet die mechanische Stabilität der Elektroden und häufig auch die Haftung des Aktivmaterials auf den Stromkollektoren.

Als Elektrolyten umfassen Lithium-Ionen-Zellen meist Lösungen von Lithiumsalzen wie Lithiumhexafluorophosphat (LiPF₆) in organischen Lösungsmitteln (z. B. Ether und Ester der Kohlensäure).

Die Kompositelektroden werden im Allgemeinen bei der Herstellung einer Lithium-Ionen-Zelle mit einem oder mehreren Separatoren zu einem Elektroden-Separator-Verbund kombiniert. Hierbei werden die Elektroden und Separatoren oft, allerdings keinesfalls zwingend, unter Druck, gegebenenfalls auch durch Lamination oder durch Verklebung, miteinander verbunden. Die grundsätzliche Funktionsfähigkeit der Zelle kann dann durch Tränkung des Verbunds mit dem Elektrolyten hergestellt werden.

In vielen Ausführungsformen wird der Elektroden-Separator-Verbund in Form eines Wickels gebildet oder zu einem Wickel verarbeitet. Im ersten Fall werden beispielsweise eine bandförmige positive Elektrode und eine bandförmige negative Elektrode sowie mindestens ein bandförmiger Separator separat einer Wickelmaschine zugeführt und in dieser zu einem Wickel mit der Sequenz positive Elektrode / Separator / negative Elektrode spiralförmig aufgewickelt. Im zweiten Fall werden eine bandförmige positive Elektrode und eine bandförmige negative Elektrode sowie mindestens ein bandförmiger Separator zunächst zu einem Elektroden-Separator-Verbund kombiniert, beispielsweise unter Anwendung des erwähnten Drucks. In einem weiteren Schritt wird dann der Verbund aufgewickelt.

Für Anwendungen im Automobilbereich, für E-Bikes oder auch für andere Anwendungen mit hohem Energiebedarf, wie z.B. in elektrischen Werkzeugen, werden Lithium-Ionen-Zellen mit möglichst hoher Energiedichte benötigt, die gleichzeitig in der Lage sind, mit hohen Strömen beim Laden und Entladen belastet zu werden.

Häufig sind Zellen für die genannten Anwendungen als zylindrische Rundzellen ausgebildet, beispielsweise mit dem Formfaktor 21 × 70 (Durchmesser mal Höhe in mm). Zellen dieser Art umfassen stets einen Elektroden-Separator-Verbund in Form eines Wickels. Moderne Lithium-Ionen-Zellen dieses Formfaktors können eine Energiedichte von bis zu 270 Wh/kg erreichen.

Eine Herausforderung stellt das elektrische Kontaktieren der Elektroden eines Energiespeicherelements dar. Beispielsweise bei Rundzellen mit dem Formfaktor 21 × 70 müssen die Elektroden des Wickels elektrisch angebunden und mit den elektrischen Polen des jeweiligen Gehäuses verbunden werden.

Klassisch kommt hierbei das sogenannte "Tab-Design" zur Anwendung. Ein Ende eines streifenförmigen Metallblechs (das "Tab") wird mit einer Elektrode verschweißt, das andere Ende beispielsweise mit einem Funktionsteil eines CID (current interrupt device), das in einen mehrteiligen Deckel eines Metallgehäuses integriert ist. Ein Beispiel hierfür ist in der US 7432010 B2 beschrieben.

Die Funktion eines CID ist dem Fachmann bekannt, ein CID gewährleistet im Fall einer Fehlfunktion, dass der Stromfluss in einem Energiespeicherelement unterbrochen wird. Eine weitere Sicherheitsfunktion ist das sogenannte PRV (pressure relief valve). Dieses öffnet bei Überschreiten eines definierten Grenzdrucks und verhindert den Aufbau eines gefährlichen Überdrucks in einem Energiespeicherelement.

Das Tab-Design hat einige Schwächen. Ein Problem hierbei ist, dass das Tab verhältnismäßig lang sein muss, weil es nur vor dem Schließen des Gehäuses an die Innenseite des Deckels geschweißt werden kann. Und beim Verschließen des Gehäuses muss das Tab mindestens einmal gefaltet werden, was produktionstechnisch oft nicht einfach zu realisieren ist. Darüber hinaus nimmt das gefaltete Tab innerhalb eines Gehäuses Raum ein, der nicht mehr für elektrochemisches Aktivmaterial zur Verfügung steht, und das Tab selbst ist ein Engpass in Bezug auf den Stromfluss in und aus dem Gehäuse, aber auch in Bezug auf die Wärmeableitung. Wenn eine elektrochemische Zelle in Betrieb ist, wird in den Elektroden Wärme erzeugt, die abgeleitet werden muss. Dies ist schwierig, wenn nur ein Tab als thermische Brücke zur Verfügung steht.

In den letzten Jahren wurde verstärkt an Lithium-Ionen-Zellen gearbeitet, bei denen die Elektroden mittels eines sogenannten "Tabless-Designs" kontaktiert werden. Hierbei wird auf Tabs gänzlich verzichtet. Stattdessen werden Elektroden-Separator-Verbund in Form eines Wickels gefertigt, bei denen die Elektroden metallische Stromkollektoren mit unbeschichteten Längsrändern aufweisen, welche an Stirnseiten des Wickels aus dem Wickel herausragen. Dort können metallische Kontaktblechteile auf die Längsränder aufgeschweißt werden, wie das beispielsweise in der WO 2017/215900 A1 beschrieben ist. Dadurch ist es möglich, den Stromkollektor und damit auch die dazugehörige Elektrode über seine / ihre gesamte Länge elektrisch zu kontaktieren. Dies senkt den Innenwiderstand innerhalb der Zellen sehr deutlich. Das Auftreten großer Ströme kann in der Folge sehr viel besser abgefangen und auch Wärme kann besser aus dem Wickel abgeführt werden.

Das "Tabless-Design" löst in seinen bekannten Varianten allerdings nicht alle bestehenden Probleme. Beispielsweise ist immer noch eine elektrische Verbindung zwischen dem Deckel und dem damit zu kontaktierenden Kontaktblechteil erforderlich. Ein hierzu geeigneter elektrischer Leiter muss ebenso lang sein wie das erwähnte Tab, da er vor dem Schließen des Gehäuses noch mit dem Deckel verschweißt werden muss. Folglich muss der Leiter wie das Tab beim Schließen des Gehäuses gefaltet werden und erzeugt innerhalb des Gehäuses ein Totvolumen.

### AUFGABE UND LÖSUNG

Der vorliegenden Erfindung lag die Aufgabe zugrunde, Energiespeicherelemente bereitzustellen, die sich durch eine hohe Energiedichte auszeichnen. Gleichzeitig sollen die bereitzustellenden Energiespeicherelemente höchste Sicherheitsstandards erfüllen.

Diese Aufgabe wird durch das Verfahren zur Herstellung eines Energiespeicherelements mit den Merkmalen des Anspruchs 1 und das Energiespeicherelement mit den Merkmalen des Anspruchs 8 gelöst. Auch die Deckelbaugruppe gemäß Anspruch 9 ist Gegenstand der Erfindung. Bevorzugte Ausführungsformen der Erfindung finden sich in den abhängigen Ansprüchen 2 bis 7 und 10.

Ein erfindungsgemäßes Verfahren zeichnet sich stets durch die folgenden Merkmale aus:
a. Bereitstellen eines Elektroden-Separator-Verbunds mit der Sequenz Anode / Separator / Kathode, der eine erste endständige Stirnseite und eine zweite endständige Stirnseite aufweist;
b. Aufbringen eines Kontaktblechteils auf eine der Stirnseiten;
c. Gegebenenfalls
   - Aufschweißen eines Distanzausgleichsblechteils auf das Kontaktblechteil oder
   - Fixieren eines Distanzausgleichsblechteils auf dem Kontaktblechteil mittels Bildung einer alternativen stoffschlüssigen Verbindung oder einer formschlüssigen Verbindung;
d. Einbringen des Elektroden-Separator-Verbunds in ein Gehäuseteil, das eine endständige kreisförmige Öffnung aufweist, insbesondere in einen metallischen Gehäusebecher;
e. Schließen der kreisförmigen Öffnung des Gehäuseteils mittels eines Deckels unter Ausbildung eines geschlossenen Gehäuses, wobei der Deckel eine erste Seite aufweist, die nach dem Schließen ins Innere des Gehäuses weist, und eine zweite Seite, die nach außen weist; und
f. Anschweißen des Deckels an das Kontaktblechteil oder an das Distanzausgleichsblechteil.

Schritt b. erfolgt bevorzugt vor Schritt d.. Es ist grundsätzlich aber möglich, auch noch nach dem Einbringen des Elektroden-Separator-Verbunds in den Gehäusebecher auf eine seiner Stirnseite (die zu Öffnung hin weisende) das Kontaktblechteil aufzubringen. In beiden Fällen ist es bevorzugt, nach dem Aufbringen eine Verbindung zwischen einem aus dieser Stirnseite austretenden Stromkollektor und dem Kontaktblechteil zu bilden. Beispielsweise kann zur Bildung einer stoffschlüssigen Verbindung eine Verschweißung mittels eines Lasers erfolgen.

In vielen Fällen sitzt eine der Stirnseiten des Elektroden-Separator-Verbunds nach dem Einschieben des Elektroden-Separators unmittelbar auf dem Boden des Gehäuseteils mit der endständigen kreisförmigen Öffnung auf. Es kann dann erforderlich sein, einen aus dieser Stirnseite austretenden Stromkollektor mit dem Gehäuseboden zu kontaktieren. Dies kann durch Verschweißung mittels eines Lasers durch den Gehäuseboden hindurch erfolgen. In anderen möglichen Ausführungsformen wird auf diese Stirnseite vor Schritt d. ein passendes Kontaktblechteil aufgebracht, so dass nach dem Einbringen nur noch dieses Kontaktblechteil mit dem Gehäusebecher bzw. dessen Boden kontaktiert werden muss, beispielsweise über eine Schweißverbindung. Die Herstellung der Schweißverbindung zwischen dem Kontaktblechteil und dem Boden kann beispielsweise durch Widerstandsschweißen erfolgen.

Schritt c. ist in Fällen erforderlich, in denen das Kontaktblechteil selbst keinen Distanzausgleichsbereich umfasst. Schritt c. kann ebenfalls vor oder nach Schritt d., also dem Einbringen des Elektroden-Separator-Verbunds in den Gehäusebecher, erfolgen.

Zum Schließen der kreisförmigen Öffnung mittels des Deckels kann auf herkömmliche Verschlussverfahren zurückgegriffen werden. Bevorzugt ist der Verschluss durch Bördelung. Im Rahmen dieses Prozesses wird der Rand der kreisförmigen Öffnung radial nach innen umgebogen, gleichzeitig wird eine Dichtung komprimiert, die zwischen Deckel und dem Rand angeordnet ist. Die Dichtung und der Deckel können hierbei als vorgefertigtes Deckelbauteil verarbeitet werden, bei dem die Dichtung auf den Rand des Deckels aufgezogen ist.

In vielen Fällen ist der Komprimierungsgrad der Dichtung am höchsten im Bereich zwischen der weiter unten noch beschriebenen Einbuchtung und dem Deckel.

Besonders zeichnet sich das erfindungsgemäße Verfahren dadurch aus, dass

g. der Deckel mindestens ein Loch aufweist.

Die Verbindung zwischen dem Kontaktblechteil und dem Distanzausgleichsblechteil kann bei Bedarf zum Beispiel durch eine stoffschlüssige Verbindung, insbesondere durch Verschwei-ßung oder Verklebung oder eine Lötverbindung, realisiert werden. Auch eine Nietverbindung kommt in Frage.

Eine Verklebung kann realisiert werden, indem das Kontaktblechteil und das Distanzausgleichsblechteil durch einen Klebstoff mit elektrisch leitenden Eigenschaften verbunden werden. Solche Klebstoffe sind beispielsweise aus der Leiterplattentechnik bekannt.

Eine Lötverbindung kann gebildet werden, indem ein Lot aufgeschmolzen wird und in Kontakt mit dem Kontaktblechteil und dem Distanzausgleichsblechteil erstarrt.

Besagte Nietverbindung kann beispielsweise mit Hilfe eines Blindniets, insbesondere einem

Blinddichtniet, realisiert werden, der durch ein Loch in dem Kontaktblechteil und dem Distanzausgleichsblechteil geschoben wird.

Erfindungsgemäß wird der Deckel entweder unmittelbar mit dem Kontaktblechteil verbunden oder aber mit dem Distanzausgleichsblechteil, das wiederum mit dem Kontaktblechteil in Kontakt steht. Dies geschieht durch das erwähnte Anschweißen des Deckels.

Erfolgt während des Anschweißens ein bereichsweises Aufschmelzen des Deckels derart, dass der Deckel bzw. ein Teil des Deckels im Schweißbereich vollständig aufgeschmolzen ist, kann dies Probleme bereiten. Bei geschlossenem Gehäuse kann sich innerhalb des Gehäuses ein Druck ausbilden, der sich vom Außendruck unterscheidet. Dies gilt insbesondere, wenn das Gehäuse bereits mit einem Elektrolyten befüllt ist, da dieser beispielsweise bedingt durch beim Schweißen entstehende Wärme verdampfen oder chemische Reaktionen eingehen kann. Auf den Schweißprozess kann dies sehr negative Auswirkungen haben. In Extremfällen kann durch einen Überdruck innerhalb des Gehäuses entstehende Schmelze aus dem Schmelzbereich ausgeworfen werden.

Auch durch Kalibrierungsprozesse, die das Innenvolumen des Gehäuses reduzieren, kann innerhalb des Gehäuses ein erhöhter Druck entstehen.

Das mindestens eine Loch löst das Problem, indem es beim Anschweißen des Deckels einen Druckausgleich zwischen den beiden Seiten des Deckels ermöglicht. Dies ist möglich, so lange das mindestens eine Loch nicht verschlossen wird.

Bevorzugt wird Elektrolyt nach obenstehendem Schritt d. aber vor obenstehendem Schritt e. ins Gehäuse eingebracht.

Das mindestens eine Loch muss vor Inbetriebnahme der Zelle natürlich verschlossen werden. Es muss ein flüssigkeitsdichter Verschluss des Gehäuses gewährleistet werden.

Bevorzugt zeichnet sich das Verfahren entsprechend durch das folgende zusätzliche Merkmal a. aus:
a. Das mindestens eine Loch wird beim Anschweißen des Deckels verschlossen.

Alternativ kann man das Loch nach dem Schweißen beispielsweise mittels eines Klebstoffes verschließen.

In weiteren bevorzugten Ausführungsformen zeichnet sich das Verfahren durch mindestens eines der folgenden zusätzlichen Merkmale a. und b. aus:
a. Der Deckel wird mit Hilfe eines Lasers angeschweißt.
b. Das mindestens eine Loch wird mittels eines Lasers, insbesondere mittels des Lasers, verschlossen.

Besonders bevorzugt wird das mindestens eine Loch also mittels des gleichen Lasers verschlossen, mit dem auch der Deckel angeschweißt wird. Hierzu können beispielsweise die Ränder des Loches sowie der darunter liegende Bereich des Kontaktblechteils oder des Distanzausgleichsblechteils mittels des Lasers aufgeschmolzen werden. Beim Erstarren der Schmelze bildet sich eine Schweißverbindung zwischen dem Deckel und dem Kontaktblechteil oder dem Deckel und dem Distanzausgleichsblechteil. Gleichzeitig wird das Loch verschlossen.

In weiteren bevorzugten Ausführungsformen zeichnet sich das Verfahren durch mindestens eines der folgenden zusätzlichen Merkmale a. bis c. aus:
a. Das geschlossene Gehäuse umschließt einen Innenraum, in dem der Elektroden-Separator-Verbund angeordnet ist.
b. Der Deckel umfasst eine Metallscheibe mit einem kreisförmigen Rand, wobei die Metallscheibe eine Innenseite aufweist, die den Innenraum begrenzt.
c. Die Metallscheibe umfasst das mindestens eine Loch.

Die Merkmale a. bis c. sind bevorzugt in Kombination miteinander realisiert.

In weiteren bevorzugten Ausführungsformen zeichnet sich das Verfahren durch mindestens eines der folgenden zusätzlichen Merkmale a. und b. aus:
a. Das Kontaktblechteil umfasst einen Verbindungsbereich, in dem es mit der Innenseite der Metallscheibe verbunden wird.
b. Das Distanzausgleichsblechteil umfasst einen Verbindungsbereich, in dem es mit der Innenseite der Metallscheibe verbunden wird.

Die Merkmale a. und b. sind bevorzugt in Kombination miteinander realisiert.

In weiteren bevorzugten Ausführungsformen zeichnet sich das Verfahren durch mindestens eines der folgenden zusätzlichen Merkmale a. und b. aus:
a. Die Metallscheibe umfasst einen Verbindungsbereich, in dem sie mit dem Verbindungsbereich des Kontaktblechteils oder dem Verbindungsbereich des Distanzausgleichsblechteils verschweißt wird.
b. Der Verbindungsbereich umfasst das mindestens eine Loch.

Bevorzugt werden die Metallscheibe und das Kontaktblechteil oder die Metallscheibe und das Distanzausgleichsblechteil entsprechend in den Verbindungsbereichen durch die Verschwei-ßung miteinander verschmolzen.

Wie im Folgenden erläutert wird, entfällt mit dem hier beschriebenen Design das Erfordernis eines langen elektrischen Leiters zur elektrischen Verbindung des Deckels und des Kontaktblechteils. Die Funktion des Leiters wird nämlich entweder durch das Distanzausgleichsblechteil oder das Kontaktblechteil mit dem Distanzausgleichsbereich übernommen. Diese überbrücken den Abstand zwischen dem Deckel und dem Elektroden-Separator-Verbund innerhalb des Gehäuses.

Zudem kann die Schweißverbindung zwischen dem Deckel und dem Kontaktblechteil oder dem Deckel und dem Distanzausgleichsblechteil erst nach dem Schließen des Gehäuses gebildet werden, was große Vorteile hinsichtlich einer optimalen Ausnutzung des zur Verfügung stehenden Gehäusevolumens mit sich bringt.

In bevorzugten Ausführungsformen zeichnet sich der Deckel durch mindestens eines der unmittelbar folgenden Merkmale a. bis e. aus:
a. Der Deckel ist eine Deckelbaugruppe, die neben der Metallscheibe eine Polkappe umfasst, die mit der Metallscheibe in elektrischem Kontakt steht.
b. Die Polkappe sitzt unmittelbar auf der Metallscheibe auf.
c. Die Polkappe und die Metallscheibe schließen einen Zwischenraum ein.
d. Die Polkappe umfasst mindestens eine Durchbrechung, durch welche der Verbindungsbereich der Metallscheibe von außerhalb des Gehäuses zugänglich ist, insbesondere für einen Laser von außerhalb des Gehäuses zugänglich ist.

Besonders bevorzugt sind die unmittelbar vorstehenden Merkmale a. bis d. in Kombination realisiert.

Bei Ausführungen des Deckels als Deckelbaugruppe gewährleistet die Durchbrechung in der Polkappe die Zugänglichkeit des Verbindungsbereichs von außen. So kann die Verschweißung mittels eines Lasers vorgenommen werden.

In Ausführungsformen der Erfindung, bei denen das Kontaktblechteil die Funktion des Distanzausgleichs zwischen dem Deckel und dem Elektroden-Separator-Verbund übernimmt, ist das Verfahren bevorzugt durch mindestens eines der unmittelbar folgenden Merkmale a. bis c. gekennzeichnet.
a. Das Kontaktblechteil umfasst einen Kontaktierungsbereich, bevorzugt einen scheibenförmigen Kontaktierungsbereich, beispielsweise einen ringscheibenförmigen Kontaktierungsbereich, an den der Längsrand des Anodenstromkollektors oder der Längsrand des angebunden ist, insbesondere angeschweißt ist.
b. Der Kontaktierungsbereich ist um den Distanzausgleichsbereich herum angeordnet, vorzugsweise umschließt den Distanzausgleichsbereich.
c. Der Distanzausgleichsbereich erstreckt sich aus der Ebene des Kontaktierungsbereichs heraus bis hin zu dem Verbindungsbereich des Kontaktblechteils, in dem das Kontaktblechteil mit der Innenseite der Metallscheibe verbunden wird.

Bevorzugt sind die unmittelbar vorstehenden Merkmale a. und b. in Kombination realisiert. Besonders bevorzugt sind die unmittelbar vorstehenden Merkmale a. bis c. in Kombination realisiert.

Das Kontaktblechteil umfasst in bevorzugten Ausführungsformen somit einen Kontaktierungsbereich, einen Distanzausgleichsbereich und einen Verbindungsbereich. Der Kontaktierungsbereich erstreckt sich bevorzugt in einer ersten Ebene und liegt vorzugsweise flach auf einer der Stirnseiten auf. Der Distanzausgleichsbereich erstreckt sich aus der Ebene des Kontaktierungsbereichs heraus bis hin zu dem Verbindungsbereich. Der Verbindungsbereich erstreckt sich bevorzugt in einer zweiten Ebene und liegt bevorzugt flach an der Innenseite der Metallscheibe an. Bevorzugt ist die Ebene des Verbindungsbereichs somit axial beabstandet zur Ebene des Kontaktierungsbereichs. Besonders bevorzugt sind die beiden Ebenen parallel zueinander ausgerichtet. Das Kontaktblechteil umfasst somit bevorzugt zwei Bereiche (den Kontaktierungsbereich und den Verbindungsbereich) in unterschiedlichen Ebenen.

Wie oben bereits erwähnt, kann der Kontaktierungsbereich des Kontaktblechteils als Ringscheibe ausgebildet sein. In anderen Ausführungsformen kann der Kontaktierungsbereich einzelne Kontaktsegmente aufweisen, die um den Distanzausgleichsbereich herum angeordnet sind und/oder die über den Verbindungsbereich miteinander verbunden sind. Beispielsweise können der Verbindungsbereich und die Kontaktsegmente über Stege miteinander verbunden sein. Diese Stege können den Distanzausgleichsbereich bilden. Bei den Kontaktsegmenten kann es sich beispielsweise um Ringsegmente handeln.

In Ausführungsformen der Erfindung, bei denen das Distanzausgleichsblechteil die Funktion des Distanzausgleichs zwischen dem Deckel und dem Elektroden-Separator-Verbund übernimmt, zeichnet sich das Verfahren bevorzugt durch mindestens eines der unmittelbar folgenden Merkmale a. bis c. aus.
a. Das Distanzausgleichsblechteil umfasst einen Kontaktierungsbereich, insbesondere einen ringscheibenförmigen Kontaktierungsbereich, der insbesondere durch besagte Verschweißung mit dem Kontaktblechteil verbunden wird.
b. Der Kontaktierungsbereich ist um dem Distanzausgleichsbereich herum angeordnet, in bevorzugten Ausführungsformen umschließt er den Distanzausgleichsbereich.
c. Der Distanzausgleichsbereich erstreckt sich aus der Ebene des Kontaktierungsbereichs heraus bis hin zu dem Verbindungsbereich des Distanzausgleichsblechteils, in dem das Distanzausgleichsblechteil mit der Innenseite der Metallscheibe verbunden wird.

Bevorzugt sind die unmittelbar vorstehenden Merkmale a. und b. in Kombination realisiert. Besonders bevorzugt sind die unmittelbar vorstehenden Merkmale a. bis c. in Kombination realisiert.

Das Distanzausgleichsblechteil umfasst in bevorzugten Ausführungsformen somit einen Kontaktierungsbereich, einen Distanzausgleichsbereich und einen Verbindungsbereich. Der Kontaktierungsbereich erstreckt sich bevorzugt in einer ersten Ebene und liegt vorzugsweise flach auf dem Kontaktblechteil auf. Der Distanzausgleichsbereich erstreckt sich aus der Ebene des Kontaktierungsbereichs heraus bis hin zu dem Verbindungsbereich. Der Verbindungsbereich erstreckt sich bevorzugt in einer zweiten Ebene und liegt bevorzugt flach an der Innenseite der Metallscheibe an. Bevorzugt ist die Ebene des Verbindungsbereichs somit axial beabstandet zur Ebene des Kontaktierungsbereichs. Besonders bevorzugt sind die beiden Ebenen parallel zueinander ausgerichtet. Das Distanzausgleichsblechteil umfasst somit bevorzugt zwei Bereiche (den Kontaktierungsbereich und den Verbindungsbereich) in unterschiedlichen Ebenen.

Neben einer Ringscheibenform kann der Kontaktierungsbereich des Distanzausgleichsblechteils auch andere Ausgestaltungen aufweisen. Beispielsweise kann er ringförmig ausgebildet sein und dabei einen polygonalen Außenumfang aufweisen, also beispielsweise einen äußeren Rand mit sechs oder mit acht Ecken aufweisen. In anderen Ausführungsformen kann der Kontaktierungsbereich - wie im Fall des Kontaktblechteils - einzelne Kontaktsegmente aufweisen, die um den Distanzausgleichsbereich herum angeordnet sind und/oder die über den Verbindungsbereich miteinander verbunden sind.

An dieser Stelle soll nicht unerwähnt bleiben, dass grundsätzlich auch die Metallscheibe des Deckels die Aufgabe des Distanzausgleichs zwischen dem Deckel und dem Kontaktblechteil übernehmen kann. Hierzu ist es erforderlich, dass die Metallscheibe einen Distanzausgleichsbereich umfasst, der in einem Verbindungsbereich, bevorzugt durch Verschweißung oder Verklebung, mit dem Kontaktblechteil verbunden ist. Dieser Distanzausgleichsbereich erstreckt sich dann in axialer Richtung bevorzugt bis hin zu einem Kontaktblechteil, das auf einer der Stirnseiten aufsitzt.

Bevorzugt sind in den Deckel des erfindungsgemäßen Energiespeicherelements mehrere Sicherheitsfunktionen integriert:
a. Die Metallscheibe des Deckels ist bevorzugt als PRV (pressure relief valve) ausgebildet und umfasst zu diesem Zweck eine langgestreckte Schwächungsnut.
b. Im Verbindungsbereich zeichnet sich die Metallscheibe durch eine geringere Materialstärke aus als in dem den Verbindungsbereich umgebenden Bereich.

Besonders bevorzugt sind die unmittelbar vorstehenden Merkmale a. und b. in Kombination realisiert. Sie können aber auch unabhängig voneinander realisiert sein.

Das unmittelbar vorstehende Merkmal b. ist relevant im Zusammenhang mit einer CID-Funktion des Deckels, was anhand der Zeichnungen zur Erfindung nachstehend noch erläutert wird.

Bevorzugt umläuft die langgestreckte Schwächungsnut kreisförmig das Zentrum der Metallscheibe.

Festzuhalten bleibt jedenfalls, dass das gemäß dem Verfahren hergestellte Energiespeicherelemente bevorzugt Energiespeicherelemente sind, die sowohl eine PRV- als auch eine CID-Funktionalität aufweisen.

Alle gemäß dem oben beschriebenen Verfahren herstellbare Energiespeicherelemente sind Gegenstand der Erfindung. Bevorzugt zeichnet sich ein erfindungsgemäßes Energiespeicherelement durch die folgenden Merkmale aus:
a. Das Energiespeicherelement umfasst einen Elektroden-Separator-Verbund mit der Sequenz Anode / Separator / Kathode,
b. der Elektroden-Separator-Verbund liegt in Form eines zylindrischen Wickels mit einer ersten endständigen Stirnseite und einer zweiten endständigen Stirnseite und einem dazwischen liegenden Wickelmantel vor,
c. die Anode des Elektroden-Separator-Verbunds umfasst einen Anodenstromkollektor, der einen ersten Längsrand und einen dazu parallelen zweiten Längsrand aufweist und einen Hauptbereich, der mit einer Schicht aus negativem Elektrodenmaterial beladen ist, sowie einen freien Randstreifen, der sich entlang seines ersten Längsrands erstreckt und der nicht mit dem negativen Elektrodenmaterial beladen ist,
d. die Kathode des Elektroden-Separator-Verbunds umfasst einen Kathodenstromkollektor, der einen ersten Längsrand und einen dazu parallelen zweiten Längsrand aufweist und einen Hauptbereich, der mit einer Schicht aus positivem Elektrodenmaterial beladen ist, sowie einen freien Randstreifen, der sich entlang seines ersten Längsrands erstreckt und der nicht mit dem Elektrodenmaterial beladen ist,
e. die Anode und die Kathode sind innerhalb des Elektroden-Separator-Verbunds derart angeordnet, dass der erste Längsrand des Anodenstromkollektors aus der ersten endständigen Stirnseite und der erste Längsrand des Kathodenstromkollektors aus der zweiten endständigen Stirnseite des Elektroden-Separator-Verbunds austritt,
f. das Energiespeicherelement umfasst ein Kontaktblechteil, das auf dem ersten Längsrand des Anodenstromkollektors aufsitzt und die erste endständige Stirnseite abdeckt oder auf dem ersten Längsrand des Kathodenstromkollektors aufsitzt und die zweite endständige Stirnseite abdeckt und mit diesem verbunden ist,
g. das Energiespeicherelement umfasst ein luft- und flüssigkeitsdicht verschlossenes Gehäuse, das ein metallisches Gehäuseteil mit einer endständigen kreisförmigen Öffnung, insbesondere einen metallischen Gehäusebecher mit einer endständigen kreisförmigen Öffnung, und einen Deckel mit einem kreisförmigen Rand, welcher die kreisförmige Öffnung verschließt, umfasst, und das einen Innenraum umschließt, in dem der Elektroden-Separator-Verbund angeordnet ist,
h. der Deckel umfasst eine Metallscheibe mit einem kreisförmigen Rand, wobei die Metallscheibe eine Innenseite aufweist, die den Innenraum begrenzt, und eine gegenüberliegende Außenseite,
i. entweder umfasst das Kontaktblechteil einen Distanzausgleichsbereich, der in einem Verbindungsbereich mit der Innenseite der Metallscheibe verbunden ist, oder es ist ein Distanzausgleichsblechteil auf das Kontaktblechteil aufgeschweißt, wobei das Distanzausgleichsblechteil einen Distanzausgleichsbereich umfasst, der in einem Verbindungsbereich mit der Innenseite der Metallscheibe verbunden ist.
j. Die Metallscheibe umfasst einen Verbindungsbereich, in dem sie mit dem Verbindungsbereich oder dem Verbindungsbereich verschweißt ist.
k. In dem Verbindungsbereich weist die Metallscheibe im Bereich der Verschweißung eine Vertiefung oder eine Dickenschwächung auf.

Auf viele Merkmale des Energiespeicherelements wurde im Rahmen der Erläuterung des erfindungsgemäßen Verfahrens bereits verwiesen. Auf die entsprechenden Ausführungen wird hiermit Bezug genommen.

Bevorzugt ist das erfindungsgemäße elektrochemische Energiespeicherelement eine elektrochemische Energiespeicherzelle.

Wie oben bereits ausgeführt, ist es möglich, dass beim Schweißen die Ränder des Loches sowie der darunter liegende Bereich des Kontaktblechteils oder des Distanzausgleichsblechteils mittels des Lasers aufgeschmolzen werden. Abhängig von den Schweißparametern ist es möglich, dass nur die Ränder des Loches mit dem darunter liegenden Bereich des Kontaktblechteils oder des Distanzausgleichsblechteils verschmelzen und das Loch selbst nicht mit Schmelze gefüllt wird. In diesem Fall verbleibt nach dem Erstarren der Schmelze eine Vertiefung, insbesondere auf der Außenseite der Metallscheibe. Wenn Schmelze von den Rändern hingegen das Loch verschließt, resultiert in aller Regel eine Dickenschwächung im Verschmelzungsbereich.

Hinsichtlich der mechanischen Stabilität des herzustellenden Energiespeicherelements sowie auch der erwähnten Sicherungsfunktionen sind ferner die folgenden bevorzugten Merkmale von Bedeutung:
a. Das Gehäuse umfasst eine Dichtung aus einem Kunststoffmaterial, welche den Rand des Deckels umschließt und zwischen dem Deckel und dem Gehäuseteil mit der endständigen kreisförmigen Öffnung angeordnet ist.
b. Ein Stützring aus einem Kunststoffmaterial, ist zwischen der Metallscheibe und der dem Distanzausgleichsblechteil oder zwischen der Metallscheibe und dem Kontaktblechteil angeordnet, insbesondere eingeklemmt.
c. Der Stützring sitzt auf dem Kontaktierungsbereich des Kontaktblechteils oder dem Kontaktierungsbereich des Distanzausgleichsblechteils auf.
d. Der Stützring ist Teil der Dichtung.

Besonders bevorzugt sind die unmittelbar vorstehenden Merkmale a. bis c., in einigen besonders bevorzugten Ausführungsformen auch die Merkmale a. bis d., in Kombination realisiert.

In besonders bevorzugten Ausführungsformen zeichnet sich das Energiespeicherelement weiterhin durch die folgenden Merkmale a. und b. aus:
a. Das Gehäuseteil mit der endständigen kreisförmigen Öffnung umfasst in axialer Abfolge einen Boden, einen Zentralabschnitt und einen Verschlussabschnitt, wobei
   - der Zentralabschnitt zylindrisch ausgebildet ist und in dem Zentralabschnitt der Wickelmantel des als Wickel ausgebildeten Elektroden-Separator-Verbunds mit der Innenseite des Gehäuseteils mit der endständigen kreisförmigen Öffnung in Kontakt steht, und
   - in dem Verschlussabschnitt die ringförmige Dichtung in einem Presskontakt mit dem Rand des Deckels und der Innenseite des Gehäuseteils mit der endständigen kreisförmigen Öffnung steht, und
b. das Gehäuseteil mit der endständigen kreisförmigen Öffnung weist in dem Verschlussabschnitt einen die kreisförmige Öffnung definierenden Öffnungsrand auf, der radial nach innen über den von der Dichtung umschlossenen Rand des Deckels umgebogen ist und der den Deckel einschließlich der Dichtung in der kreisförmigen Öffnung des Gehäuseteils mit der endständigen kreisförmigen Öffnung formschlüssig fixiert.

Der Elektroden-Separator-Verbund steht mit der Innenseite des Gehäuseteils mit der endständigen kreisförmigen Öffnung bevorzugt in unmittelbarem Kontakt. Besonders bevorzugt liegt er unmittelbar an der Innenseite an. In einigen Ausführungsformen kann es allerdings vorgesehen sein, die Innenseite, beispielsweise mittels einer Folie, elektrisch zu isolieren. In diesem Fall steht der Elektroden-Separator-Verbunds in Kontakt über die Folie mit der Innenwand in Kontakt.

Der Boden des Gehäuseteils mit der endständigen kreisförmigen Öffnung ist bevorzugt kreisförmig ausgebildet. Es wird meist durch Tiefziehen gebildet. Es ist aber auch möglich, das Gehäuseteil durch Einschweißen eines Bodens in ein rohrförmiges Halbteil zu bilden.

Bevorzugt ist das erfindungsgemäße Energiespeicherelement als zylindrische Rundzelle ausgebildet. Seine Höhe liegt bevorzugt im Bereich von 50 mm bis 150 mm. Sein Durchmesser liegt bevorzugt im Bereich von 15 mm bis 60 mm. Zylindrische Rundzellen mit diesen Formfaktoren eignen sich beispielsweise zur Stromversorgung elektrischer Antriebe von Kraftfahrzeugen.

### Bevorzugte elektrochemische Ausführungsformen

In einer besonders bevorzugten Ausführungsform der Erfindung basiert das erfindungsgemäße Energiespeicherelement auf Lithium-lonen-Technologie.

Für die Elektroden des Energiespeicherelements können im Grunde sämtliche für sekundäre Lithium-Ionen-Zellen bekannten Elektrodenmaterialien verwendet werden.

Die Nennkapazität eines als zylindrische Rundzelle ausgebildeten Energiespeicherelements auf Lithium-Ionen-Basis beträgt bevorzugt bis zu 15000 mAh. Mit dem Formfaktor von 21 × 70 hat die Rundzelle in einer Ausführungsform als Lithium-Ionen-Zelle bevorzugt eine Nennkapazität im Bereich von 1500 mAh bis 7000 mAh, besonders bevorzugt im Bereich von 3000 bis 5500 mAh. Mit dem Formfaktor von 18 x 65 hat die Rundzelle in einer Ausführungsform als Lithium-Ionen-Zelle bevorzugt eine Nennkapazität im Bereich von 1000 mAh bis 5000 mAh, besonders bevorzugt im Bereich von 2000 bis 4000 mAh.

In weiteren Ausführungsformen kann es sich bei dem Energiespeicherelement auch um eine Natrium-Ionen-Zelle, eine Kalium-Ionen-Zelle, eine Calzium-Ionen-Zelle, eine Magnesium-Ionen-Zelle oder eine Aluminium-Ionen-Zelle handeln. Unter diesen Varianten sind Energiespeicherelemente mit Natrium-Ionen-Zellchemie besonders bevorzugt.

Besonders bevorzugt bestehen bei einem Energiespeicherelement auf Basis von Natrium-lonen-Technologie sowohl der Anoden- als auch der Kathodenstromkollektor aus Aluminium oder einer Aluminiumlegierung. Auch das Gehäuse und das Kontaktblechteil sowie ggf. auch das Distanzausgleichsblechteil können aus Aluminium oder aus einer Aluminiumlegierung bestehen.

### Bevorzugte Ausgestaltung des Gehäuses

Besonders bevorzugt zeichnet sich das erfindungsgemäße Energiespeicherelement durch mindestens eines der folgenden Merkmale a. bis c. aus:
a. Der Zentralabschnitt und der Verschlussabschnitt werden durch eine Einbuchtung, welche die Außenseite des Gehäuseteils mit der endständigen kreisförmigen Öffnung ringförmig umläuft, getrennt.
b. Das Gehäuseteil mit der endständigen kreisförmigen Öffnung weist in dem Zentralabschnitt und dem Verschlussabschnitt einen identischen maximalen Außendurchmesser auf.
c. Im Bereich der Einbuchtung ist der Außendurchmesser des Gehäuseteils mit der endständigen kreisförmigen Öffnung reduziert, bevorzugt um das 4- bis 20-fache der Wandstärke des Gehäuseteils mit der endständigen kreisförmigen Öffnung in diesem Bereich.

Es ist bevorzugt, dass zumindest die unmittelbar vorstehenden Merkmale a. und b. in Kombination realisiert sind. Besonders bevorzugt sind alle drei unmittelbar vorstehenden Merkmale a. bis c. in Kombination realisiert.

Bevorzugt liegt die ringförmige Dichtung in dem Verschlussabschnitt komprimiert vor. Sie wird bevorzugt radial gegen den kreisförmigen Rand des Deckels gepresst.

Eine erfindungsgemäße Deckelbaugruppe zeichnet sich bevorzugt durch die folgenden Merkmale a. bis g. aus:
a. Die Deckelbaugruppe umfasst eine Metallscheibe und eine Polkappe, die in elektrischem sowie in unmittelbarem mechanischem Kontakt miteinander stehen.
b. Die Polkappe sitzt unmittelbar auf der Metallscheibe auf.
c. Die Polkappe und die Metallscheibe schließen einen Zwischenraum ein.
d. Die Metallscheibe umfasst den oben bereits beschriebenen Verbindungsbereich, in dem sie mit dem Verbindungsbereich des Kontaktblechteils oder dem Verbindungsbereich des Distanzausgleichsblechteils verschweißbar ist.
e. Die Polkappe umfasst mindestens eine Durchbrechung, durch welche der Verbindungsbereich von außerhalb des Gehäuses zugänglich ist, insbesondere für einen Laser von außerhalb des Gehäuses zugänglich ist.
f. Die Deckelbaugruppe umfasst eine Dichtung, die auf ihren Rand aufgezogen ist.
g. Der Verbindungsbereich umfasst mindestens ein Loch.

Einige Teile der Deckelbaugruppe wurden bei der Erläuterung des erfindungsgemäßen Verfahrens bereits erläutert. Auf diese Ausführungen wird hiermit Bezug genommen.

Das mindestens eine Loch ist oder umfasst vorzugsweise ein Loch mit einem minimalen Durchmesser von 0,01 mm und einem maximalen Durchmesser von 1 mm.

### Bevorzugte Ausführungsformen des Kontaktblechteils und des Distanzausgleichsblechteils

Grundsätzlich kann das Kontaktblechteil mit dem Anodenstromkollektor oder dem Kathodenstromkollektor elektrisch verbunden sein.

In einer besonders bevorzugten Ausführungsform der Erfindung zeichnet sich ein mit dem Anodenstromkollektor elektrisch verbundenes Kontaktblechteil durch mindestens eines der folgenden Merkmale a. und b. aus:
a. Das Kontaktblechteil besteht aus Nickel oder Kupfer oder Titan oder eine Nickel- oder Kupfer- oder Titanlegierung oder Edelstahl, beispielsweise vom Typ 1.4303 oder 1.4404 oder vom Typ SUS304, oder aus nickelplattiertem Kupfer.
b. Das Kontaktblechteil besteht aus dem gleichen Material wie der Anodenstromkollektor.

In einer weiteren besonders bevorzugten Ausführungsform der Erfindung zeichnet sich ein mit dem Kathodenstromkollektor elektrisch verbundenes Kontaktblechteil durch mindestens eines der folgenden Merkmale a. und b. aus:
a. Das Kontaktblechteil besteht aus Aluminium oder einer Aluminiumlegierung.
b. Das Kontaktblechteil besteht aus dem gleichen Material wie der Anodenstromkollektor.

Das Distanzausgleichsblechteil besteht bevorzugt aus dem gleichen Material wie das Kontaktblechteil, auf das es aufgeschweißt ist.

Besonders bevorzugt zeichnen sich das mit dem Anodenstromkollektor verbundene Kontaktblechteil und/oder das mit dem Kathodenstromkollektor elektrisch verbundene Kontaktblechteil durch mindestens eines der unmittelbar folgenden Merkmale a. und b. aus:
a. Das Kontaktblechteil weist eine bevorzugt gleichmäßige Dicke im Bereich von 50 µm bis 600 µm, bevorzugt im Bereich von 150 µm bis 350 µm, auf.
b. Das Kontaktblechteil ist derart dimensioniert, dass es mindestens 40 %, bevorzugt mindestens 70 %, besonders bevorzugt mindestens 80 % der ersten endständigen oder der zweiten endständigen Stirnseite abdeckt.

Es ist besonders bevorzugt, dass die unmittelbar vorstehenden Merkmale a. und b. in Kombination miteinander realisiert sind.

Das Distanzausgleichsblechteil ist besteht bevorzugt aus einem Blech mit einer Dicke im Bereich von 50 µm bis 1 mm.

Die möglichst großflächige Abdeckung der Stirnseite ist für das thermische Management des erfindungsgemäßen Energiespeicherelements von Bedeutung. Je größer die Abdeckung ist, desto eher ist es möglich, möglichst lange Abschnitte des ersten Längsrands des jeweiligen Stromkollektors zu kontaktieren. In Elektroden-Separator-Verbund gebildete Wärme kann so gut über das Kontaktblechteil abgeführt werden.

Es hat sich in einigen Ausführungsformen als vorteilhaft erwiesen, den Längsrand des Stromkollektors einer Vorbehandlung zu unterziehen, bevor das Kontaktblechteil aufgesetzt wird.

Der Längsrand des Stromkollektors kann auch durch eine Vorbehandlung einer gerichteten Umformung unterzogen worden sein. Beispielsweise kann er in eine definierte Richtung umgebogen sein. Weiterhin kann der Längsrand des Stromkollektors auch ungerichtet deformiert sein, beispielsweise in Folge eines Druckkontakts mit dem Kontaktblechteil.

### Bevorzugte Ausgestaltung von Stromkollektoren und Separatoren

Der Anodenstromkollektor, der Kathodenstromkollektor und der Separator oder die Separatoren der erfindungsgemäßen Zelle weisen bevorzugt die folgenden Dimensionen auf:
- Eine Länge im Bereich von 0,5 m bis 25 m
- Eine Breite im Bereich 40 mm bis 145 mm

In dem als Wickel ausgebildeten Elektroden-Separator-Verbund liegen die bandförmige Anode, die bandförmige Kathode und der oder die bandförmigen Separatoren bevorzugt spiralförmig aufgewickelt vor. Zur Herstellung des Elektroden-Separator-Verbunds werden die bandförmigen Elektroden und der oder die bandförmigen Separatoren in der Regel einer Wickelvorrichtung zugeführt und in dieser bevorzugt um eine Wickelachse herum spiralförmig aufgewickelt. Eine Verklebung der Elektroden und der Separatoren oder eine Kontaktierung bei erhöhten Temperaturen ist hierbei meist nicht erforderlich. In einigen Ausführungsformen werden die Elektroden und der Separator oder die Separatoren auf einen zylindrischen oder hohlzylindrischen Wickelkern aufgewickelt, der auf einem Wickeldorn sitzt und nach dem Wickeln im Wickel verbleibt.

Der Wickelmantel kann beispielsweise durch eine Kunststofffolie oder ein Klebeband gebildet sein. Es ist auch möglich, dass der Wickelmantel durch eine oder mehrere Separatorwindungen gebildet ist.

Die Stromkollektoren des erfindungsgemäßen Energiespeicherelements dienen dazu, imjeweiligen Elektrodenmaterial enthaltene elektrochemisch aktive Komponenten möglichst großflächig elektrisch zu kontaktieren. Bevorzugt bestehen die Stromkollektoren aus einem Metall oder sind zumindest oberflächlich metallisiert.

Im Falle eines als Lithium-Ionen-Zelle ausgebildeten erfindungsgemäßen Energiespeicherelements eignen sich als Metall für den Anodenstromkollektor beispielsweise Kupfer oder Nickel oder auch andere elektrisch leitfähige Materialien, insbesondere Kupfer- und Nickellegierungen oder mit Nickel beschichtete Metalle.

Als Metall für den Kathodenstromkollektor eignen sich im Falle eines als Lithium-Ionen-Zelle ausgebildeten erfindungsgemäßen Energiespeicherelements insbesondere Aluminium oder auch andere elektrisch leitfähige Materialien, darunter auch Aluminiumlegierungen.

Bevorzugt handelt es sich bei dem Anodenstromkollektor und/oder dem Kathodenstromkollektor jeweils um eine bandförmige Metallfolie mit einer Dicke im Bereich von 4 µm bis 30 µm.

Neben Folien können als Stromkollektoren allerdings auch andere bandförmige Substrate wie metallische oder metallisierte Vliese oder offenporige metallische Schäume oder Streckmetalle verwendet werden.

Die Stromkollektoren sind bevorzugt beidseitig mit dem jeweiligen Elektrodenmaterial beladen.

Es ist bevorzugt, dass die Längsränder des oder der Separatoren die Stirnseiten des als Wickel ausgebildeten Elektroden-Separator-Verbunds bilden.

### Mögliche Ausgestaltungen der Dichtung

Es ist bevorzugt, dass sich das erfindungsgemäße Energiespeicherelement durch mindestens eines der unmittelbar folgenden Merkmale a. und b. auszeichnet:
a. Die Dichtung besteht aus einem Kunststoffmaterial, das einen Schmelzpunkt > 200 °C, bevorzugt > 300 °C, besonders bevorzugt einen Schmelzpunkt > 300 °C und < 350 °C, aufweist.
b. Bei dem Kunststoffmaterial handelt es sich um ein Polyetheretherketon (PEEK), ein Polyimid (PI), ein Polyphenylensulfid (PPS) oder ein Polytetrafluorethylen (PTFE) oder ein Polybutylenterephthalat (PBT) oder Ethylen-Propylen-Dien-Kautschuk (EPDM).

Es ist bevorzugt, dass die unmittelbar vorstehenden Merkmale a. und b. in Kombination realisiert sind.

### KURZBESCHREIBUNG DER ZEICHNUNGEN

Weitere Merkmale und Vorteile der Erfindung ergeben sich aus den Ansprüchen und aus der nachfolgenden Beschreibung von bevorzugten Ausführungsbeispielen der Erfindung in Verbindung mit den Zeichnungen. Die dort dargestellten Merkmale können dabei jeweils für sich oder in Kombination mit anderen Merkmalen verwirklicht sein.

In den Zeichnungen zeigen schematisch
- Fig. 1 einen Ausschnitt einer Querschnittsansicht einer ersten Ausführungsform einer erfindungsgemäßen Energiespeicherzelle mit einer erfindungsgemäßen Deckelbaugruppe und einem Distanzausgleichsblechteil;
- Fig. 2 einen Ausschnitt einer Querschnittsansicht einer zweiten Ausführungsform einer erfindungsgemäßen Energiespeicherzelle;
- Fig. 3 einen Ausschnitt einer Querschnittsansicht einer dritten Ausführungsform einer erfindungsgemäßen Energiespeicherzelle;
- Fig. 4 eine teilgeschnittene Darstellung der ersten Ausführungsform der erfindungsgemäßen Energiespeicherzelle;
- Fig. 5 eine Darstellung einer bevorzugten Ausführungsform einer erfindungsgemäßen Deckelbaugruppe;
- Fig. 6 eine Darstellung einer bevorzugten Ausführungsform eines für eine erfindungsgemäße Energiespeicherzelle geeigneten Distanzausgleichsblechteils;
- Fig. 7 eine Darstellung einer bevorzugten Ausführungsform eines für eine erfindungsgemäße Energiespeicherzelle geeigneten Kontaktblechteils;
- Fig. 8 einen Elektroden-Separator-Verbund, der Bestandteil einer erfindungsgemäßen Energiespeicherzelle sein kann, sowie dessen Komponenten;
- Fig. 9 eine Ansicht (Querschnittsdarstellung) des Bodenbereichs einer erfindungsgemä-ßen Energiespeicherzelle;
- Fig. 10 eine Querschnittsansicht einer vierten Ausführungsform einer erfindungsgemä-ßen Energiespeicherzelle.

### DETAILLIERTE BESCHREIBUNG DER AUSFÜHRUNGSBEISPIELE

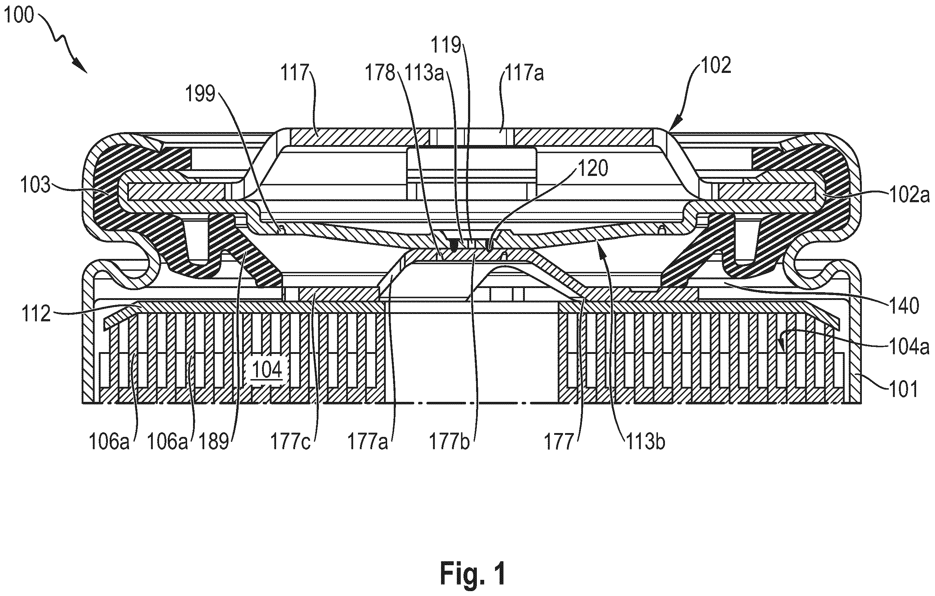

Die in **Fig. 1** dargestellte Energiespeicherzelle 100 umfasst den Elektroden-Separator-Verbund 104, der in Form eines zylindrischen Wickels mit zwei endständigen Stirnseiten und einem dazwischen liegenden Wickelmantel vorliegt. Aus der endständigen Stirnseite 104a tritt der erste Längsrand 106a des Anodenstromkollektors 106 aus. Dieser ist nicht mit Elektrodenmaterial beladen und durch Verschweißung mit dem Kontaktblechteil 112 verbunden, das auf dem Längsrand 106a aufsitzt und die erste endständige Stirnseite 104a abdeckt.

Weiterhin umfasst die Energiespeicherzelle 100 ein luft- und flüssigkeitsdicht verschlossenes Gehäuse, das den metallischen Gehäusebecher 101 mit einer endständigen kreisförmigen Öffnung und die Deckelbaugruppe 102 mit einem kreisförmigen Rand 102a, welcher die kreisförmige Öffnung verschließt, umfasst. Die Deckelbaugruppe 102 ist gemäß der Erfindung ausgebildet. Sie umfasst die Metallscheibe 113, deren Unterseite 113b entspricht auch der ersten Seite 102b des Deckels 102, die den Innenraum 140 des Gehäuses begrenzt, sowie die Polkappe 117, die unmittelbar auf der Metallscheibe 113 aufsitzt und mit dieser in elektrischem Kontakt steht sowie mit dieser einen Zwischenraum einschließt. Die zweite Seite 102c des Deckels 102 entspricht der Außenseite der Polkappe 117 und weist nach außen.

Auf das Kontaktblechteil 112 ist das Distanzausgleichsblechteil 177 aufgeschweißt

Das Distanzausgleichsblechteil 177 umfasst den Kontaktierungsbereich 177c, den Distanzausgleichsbereich 177a und den Verbindungsbereich 177b.

Der Kontaktierungsbereich 177c erstreckt sich in einer ersten Ebene, liegt flach auf dem Kontaktblechteil 112 auf und ist auf diesem bevorzugt mittels Verschweißung fixiert. Der Kontaktierungsbereich 177c ist ringscheibenförmig ausgebildet und umschließt den Distanzausgleichsbereich 177a.

Der Distanzausgleichsbereich 177a erhebt sich domartig aus der Ebene des Kontaktierungsbereichs 177c und weist eine axiale Erstreckung bis hin zu dem Verbindungsbereich 177b auf. Der Verbindungsbereich 177b erstreckt sich in einer zweiten zur ersten Ebene beabstandeten Ebene, ist auf seiner Oberseite plan ausgebildet und liegt flach an der Unterseite 113b der Metallscheibe 113 an. Die Ebene des Verbindungsbereichs 177b ist somit axial beabstandet zur Ebene des Kontaktierungsbereichs 177c. Vorliegend sind die beiden Ebenen parallel zueinander ausgerichtet. Das Distanzausgleichsblechteil 177 umfasst somit zwei Bereiche (den Kontaktierungsbereich 177c und den Verbindungsbereich 113a) in unterschiedlichen Ebenen.

Der Verbindungsbereich 177b ist begrenzt durch die ringförmige Nut 178. Der Verbindungsbereich 177b ist über eine kreislinienförmige Schweißnaht 120 mit dem Verbindungsbereich 113a der Metallscheibe 113 verbunden. Es wäre an Stelle der kreislinienförmigen Schweißnaht 120 aber auch eine Punktschweißverbindung denkbar, insbesondere auch eine Schweißverbindung über mehrere Punktschweißungen.

Die Metallscheibe 113 umfasst in ihrem Zentrum den Verbindungsbereich 113a, in dem die kreislinienförmige Verschweißung mit dem Verbindungsbereich 177b realisiert ist. Die Metallscheibe 113 ist als PRV (pressure relief valve) ausgebildet und umfasst zu diesem Zweck die kreislinienförmige, langgestreckte Schwächungsnut 199. Im Zentrum des Verbindungsbereich 113a findet sich wiederum das Loch 119, das von der Schweißnaht 120 umlaufen wird.

Die Polkappe 117 umfasst mehrere Durchbrechungen, darunter auch das Loch 117a, durch welches der Verbindungsbereich 113a für einen Laser von außerhalb des Gehäuses zugänglich ist.

Das Gehäuse umfasst weiterhin die Kunststoffdichtung 103, welche den Rand 102a der Deckelbaugruppe 102 umschließt und die metallischen Komponenten der Deckelbaugruppe 102 von dem Gehäusebecher 101 elektrisch isoliert. Gleichzeitig trägt sie dazu bei, das Gehäuse abzudichten.

Die Energiespeicherzelle 100 umfasst weiterhin einen Stützring 189, der zwischen der Metallscheibe 113 und dem Distanzausgleichsblechteil 177 eingeklemmt ist. Der Stützring 189 liegt auf dem Kontaktierungsbereich 177c des Distanzausgleichsblechteils 177 auf und drückt von unten gegen die Metallscheibe 113. Vorliegend ist der Stützring 189 ein Teil der Dichtung 103.

Die dargestellte Ausführungsform der erfindungsgemäßen Energiespeicherzelle 100 hat diverse Vorteile:
- Die erfindungsgemäße Deckelbaugruppe 102 besteht nur aus drei Teilen, nämlich (von außen nach innen) der Polkappe 117, der Metallscheibe 113 und der Dichtung 103. Klassische Deckelbaugruppen mit vergleichbarer Funktion umfassen in der Regel mindestens vier Teile. Demgegenüber ist die Konstruktion der Deckelbaugruppe 102 vereinfacht.
- Das Distanzausgleichsblechteil 177 ersetzt die eingangs erwähnten "Tabs".
- Die hieraus resultierende vereinfachte Struktur ermöglicht es, erst nach dem Verschließen des Gehäuses eine Schweißverbindung zwischen dem Distanzausgleichsblechteil 177 und der Metallscheibe 113 herzustellen. Alles, was dazu erforderlich ist, ist das Loch 117a in der Polkappe 117, wie in der Zeichnung gezeigt. Mit einem Laser kann die Schweißung von außen durchgeführt werden.

- Erleichtert wird die Verschweißung durch das Loch 119, das einen Druckausgleich zwischen dem Innenraum des Gehäuses und der Gehäuseumgebung ermöglicht. So lange die Verbindungsbereiche 113a und 117b durch die kreislinienförmige Schweißnaht 120 nicht miteinander verbunden sind, schließen sie bei vorhandenem Loch 119 die Zelle nicht luftdicht ab, so dass der Druckausgleich ermöglicht wird, bis die Schweißnaht fertiggestellt ist. Die Schweißverbindung zwischen den Verbindungsbereichen 113a und 117b muss im Übrigen nicht zwingend kreislinienförmig ausgebildet sein. Es ist auch möglich, die Ränder des Lochs 119 sowie den Verbindungsbereich 117b großflächig aufzuschmelzen.
- Die Energiespeicherzelle 100 zeichnet sich durch zwei Sicherheitsfunktionen aus, ein PRV (Druckbegrenzungsventil) und das erwähnte CID. Das PRV wird durch die Nut 199 realisiert. Wenn der Druck im Inneren des Gehäuses einen vordefinierten Grenzwert überschreitet, reißt die Metallscheibe 113 entlang der Nut 199 auf.
- Die kreislinienförmige Nut 178, die das Zentrum des Verbindungsbereichs 177b umschließt, gewährleistet die CID-Funktion. Wenn der Druck im Inneren des Gehäuses ansteigt, wölbt sich die Metallscheibe 113 nach außen. Aufgrund der Schweißverbindung zwischen der Metallscheibe 113 und dem Distanzausgleichsblechteil 177 im Verbindungsbereichs 177b, übt die sich wölbende Membran eine Zugkraft auf den Verbindungsbereichs 177b aus. Wenn diese Kraft stark genug ist, wird der Verbindungsbereich 177b entlang der Nut 178 aus dem Distanzausgleichsblechteil 177 herausgerissen. Dadurch werden der direkte Kontakt und die elektrische Verbindung zwischen der Metallscheibe 113 und dem Distanzausgleichsblechteil 177 unterbrochen. Es verbleibt ein Loch im oberen Teil des Distanzausgleichsblechteil 177.
- Ein weiterer wichtiger Aspekt: Es kann die Gefahr bestehen, dass durch die besagte Zugkraft das ganze Distanzausgleichsblechteil 177 zusammen mit der Metallscheibe 113 angehoben wird, so dass das CID nicht funktioniert. Um eine solche Situation zu vermeiden, kann die Dichtung den Stützring 189 umfassen. Falls sich die Metallscheibe 113 nach außen wölbt, hält der Stützring das Distanzausgleichsblechteil 177 an seinem Platz und gewährleistet die Funktion des CID.

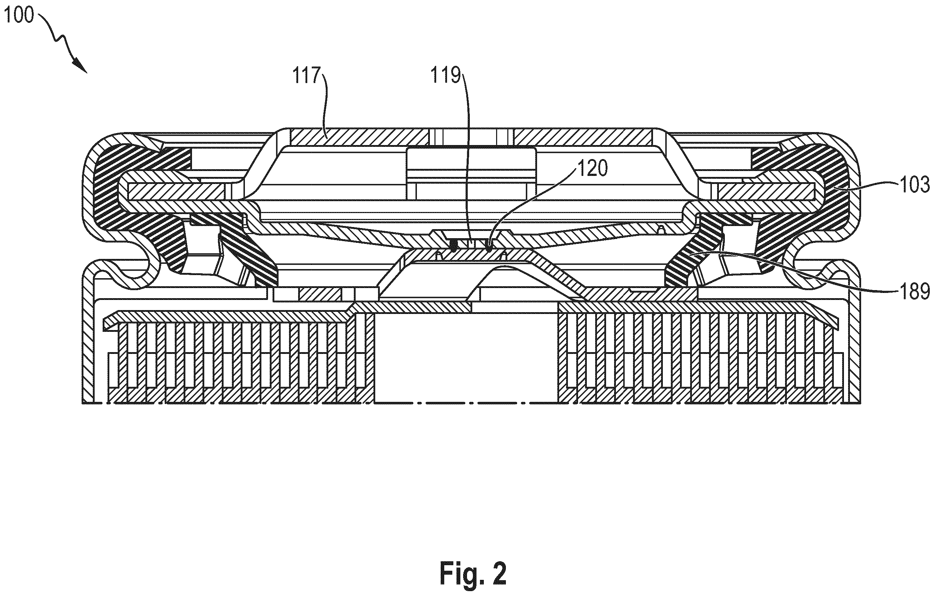

Die in **Fig. 2** dargestellte Energiespeicherzelle 100 unterscheidet sich von der in Fig. 1 dargestellten lediglich dadurch, dass der Stützring 189 nicht als Teil der Dichtung 102 ausgebildet ist.

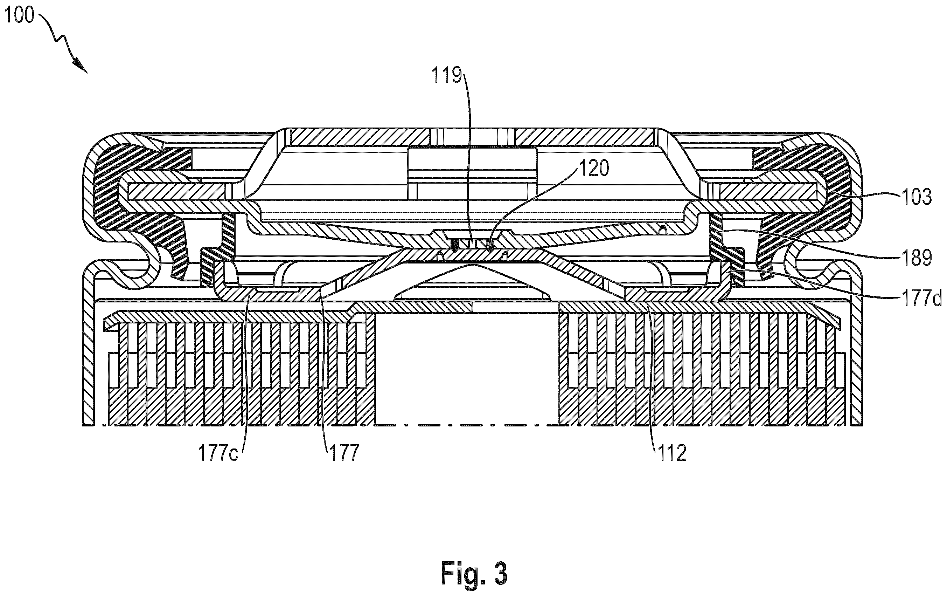

Die in **Fig. 3** dargestellte Energiespeicherzelle 100 unterscheidet sich von der in Fig. 1 dargestellten dadurch, dass der Stützring 189 nicht als Teil der Dichtung 102 ausgebildet ist. Ein weiterer Unterschied besteht darin, dass der Rand 177d des Kontaktierungsbereichs 177c um 90° nach oben gebogen ist.

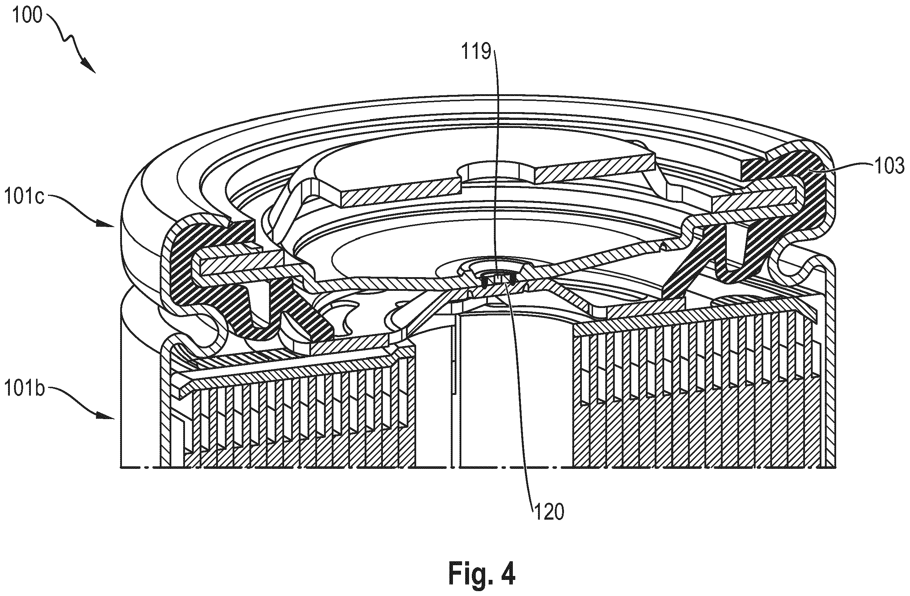

Bei **Fig. 4** handelt es sich um eine teilgeschnittene Darstellung der in Fig. 1 dargestellten Ausführungsform der erfindungsgemäßen Energiespeicherzelle.

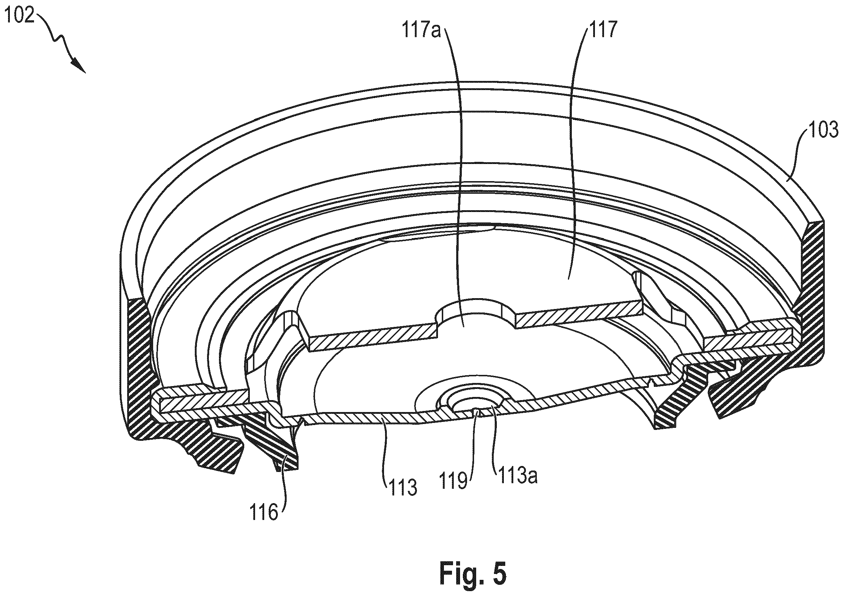

Die in **Fig. 5** dargestellte Deckelbaugruppe 102 umfasst die Polkappe 117, die Metallscheibe 113, die ringförmige Dichtung 103 und den Stützring 116. Die Metallscheibe 113 steht unmittelbar mit der Polkappe 117 in Kontakt. Die ringförmige Dichtung 103 ist auf den kreisförmigen Rand der Deckelbaugruppe 102 aufgezogen. Der Rand der Deckelbaugruppe wird wiederum gebildet von dem Rand der Metallscheibe 113, der U-förmig um den Rand der Polkappe 117 umgeschlagen ist.

Die Polkappe 117 weist als Durchbrechung ein zentrales Loch 117a auf. Unter diesem Loch findet sich das Zentrum der Metallscheibe 113. Im Zentrum der Metallscheibe 113 findet sich der Verbindungsbereich 113a, der sich durch eine im Verhältnis zu umgebenden Bereichen geringere Materialstärke auszeichnet. Im Zentrum des Verbindungsbereichs 113a ist wiederum das Loch 119 angeordnet.

Die Deckelbaugruppe ist in unmontiertem Zustand dargestellt.

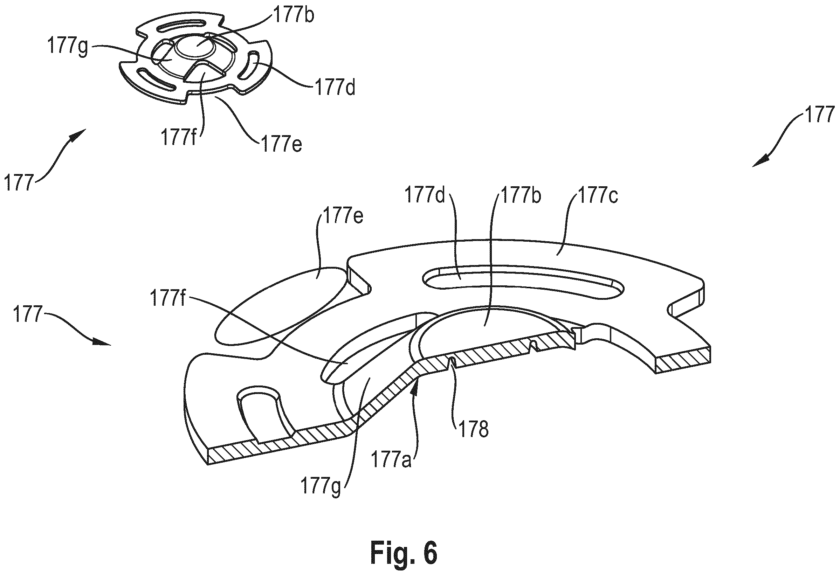

**Fig. 6** zeigt ein Distanzausgleichsblechteil 177, das im Rahmen der vorliegenden Erfindung zum Einsatz kommen kann. Dieses umfasst den ringscheibenförmigen Kontaktierungsbereich 177c, der durch Verschweißung mit dem Kontaktblechteil 112 verbunden werden kann. Der Kontaktierungsbereich 177c umschließt den Distanzausgleichsbereich 177a, der sich domartig aus der Ebene des Kontaktierungsbereichs 177c heraus erhebt. Der Distanzausgleichsbereich 177a ist gebildet durch drei Stege 177g, die einen axialen Abstand zwischen den Kontaktierungsbereich 177c und dem Verbindungsbereich 177b überbrücken. Zwischen den Stegen sind drei Öffnungen 177f angeordnet, die für den Durchlass von Elektrolyt sowie für den Druckausgleich dienen können. Dem gleichen Zweck dienen auch die Ausnehmungen 177e.

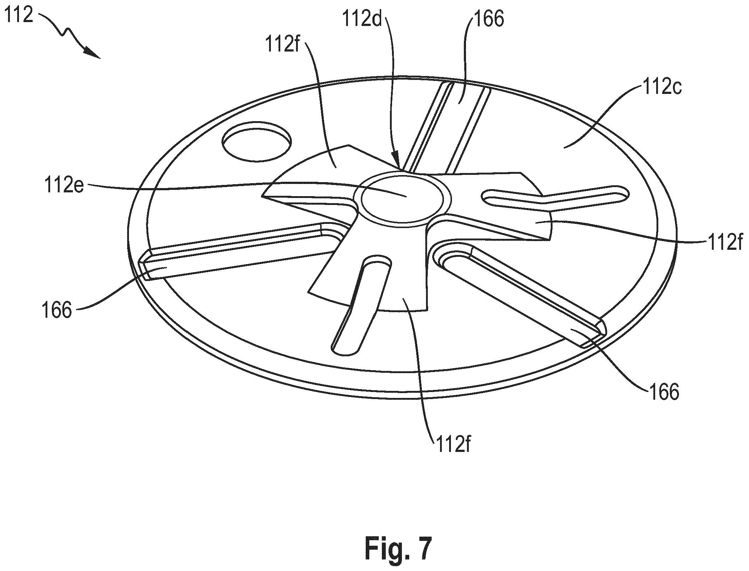

**Fig. 7** zeigt ein Kontaktblechteil 112, das im Rahmen er vorliegenden Erfindung zum Einsatz kommen kann. Dieses umfasst den scheibenförmigen Kontaktierungsbereich 112c, der zur Verschweißung mit dem Längsrand 106a des Anodenstromkollektors 106 oder dem Längsrand 109a des Kathodenstromkollektors 109 vorgesehen ist. Der Kontaktierungsbereich 112c erstreckt sich bevorzugt in einer ersten Ebene. Bevorzugt erstreckt sich der Kontaktierungsbereich 112c im Wesentlichen in einer ersten Ebene. Der Distanzausgleichsbereich 112d erhebt sich aus der Ebene des Kontaktierungsbereichs 112c heraus. Der Distanzausgleichsbereich 112d umfasst drei Stege 112f, die den Kontaktierungsbereich 112c mit dem kreisförmigen Verbindungsbereich 112e, der eine plane Oberfläche aufweist, verbinden. Der Verbindungsbereich 112c erstreckt sich bevorzugt in einer zweiten Ebene die axial beabstandet ist zur Ebene des Kontaktierungsbereichs 112c.

Im Kontaktierungsbereich 112c finden sich drei Sicken 166 in sternförmiger Anordnung. Im Bereich dieser Sicken 166 kann die Verschweißung mit einem der Längsränder erfolgen.

Ein Distanzausgleich ist in Energiespeicherzellen, wie sie in den Figuren 1 bis 4 dargestellt sind, häufig erforderlich, weil sich einzelne Bauteile wie z.B. der Elektroden-Separator-Verbund 104 nicht immer mit exakt gleichen Dimensionen, beispielsweise mit exakt der gleichen Höhe, fertigen lassen. Stattdessen treten prozessbedingt Unterschiede auf, die ausgeglichen werden müssen. Das dargestellte Kontaktblechteil 112 ermöglicht innerhalb einer Zelle in axialer Richtung einen Toleranzausgleich bei gleichzeitiger Kontaktierung des Elektroden-Separator-Verbunds bzw. des Überstands des Längsrands, der stirnseitig aus dem Verbund austritt. In der dargestellten Ausprägung kann der Distanzausgleichsbereich 112d als Feder wirken, die nach unten gegen den Elektroden-Separator-Verbund und nach oben gegen den Deckel drückt. Beim erwähnten Kalibrieren kann insbesondere diese Federwirkung ausgleichend wirken.

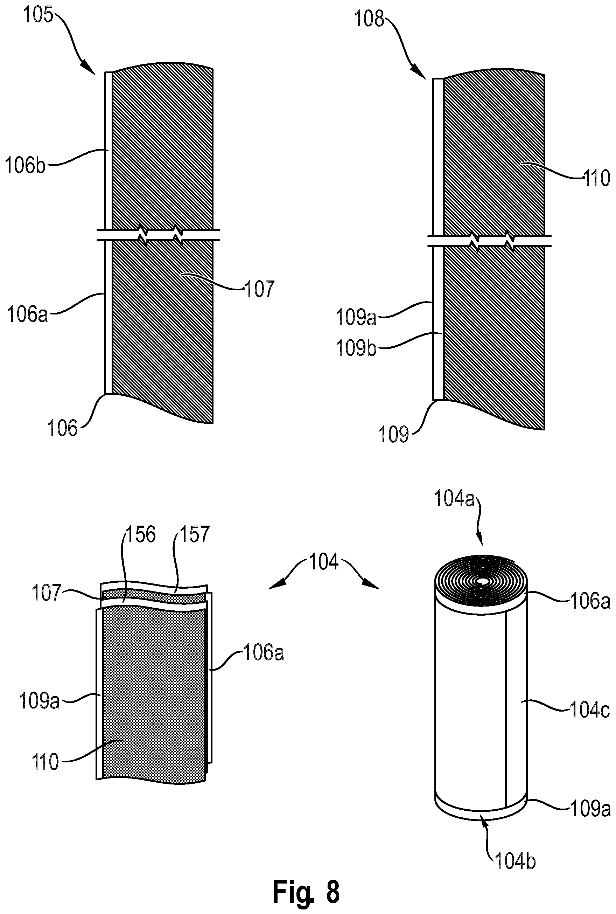

**Fig. 8** veranschaulicht den Aufbau eines Elektroden-Separator-Verbunds 104, der Bestandteil einer erfindungsgemäßen Energiespeicherzelle sein kann. Der Verbund 104 umfasst die bandförmige Anode 105 mit dem bandförmigen Anodenstromkollektor 106, der einen ersten Längsrand 106a und einen dazu parallelen zweiten Längsrand aufweist. Bei dem Anodenstromkollektor 106 handelt es sich um eine Folie aus Kupfer oder Nickel. Diese umfasst einen bandförmigen Hauptbereich, der mit einer Schicht aus negativem Elektrodenmaterial 107 beladen ist, sowie einen freien Randstreifen 106b, der sich entlang seines ersten Längsrands 106a erstreckt und der nicht mit dem Elektrodenmaterial 107 beladen ist. Weiterhin umfasst der Verbund 104 die bandförmige Kathode 108 mit dem bandförmigen Kathodenstromkollektor 109, der einen ersten Längsrand 109a und einen dazu parallelen zweiten Längsrand aufweist. Bei dem Kathodenstromkollektor 109 handelt es sich um eine Aluminiumfolie. Er umfasst einen bandförmigen Hauptbereich, der mit einer Schicht aus positivem Elektrodenmaterial 110 beladen ist, sowie einen freien Randstreifen 109b, der sich entlang seines ersten Längsrands 109a erstreckt und der nicht mit dem Elektrodenmaterial 110 beladen ist. Beide Elektroden sind einzeln in ungewickeltem Zustand dargestellt.

Die Anode 105 und die Kathode 108 sind innerhalb des Elektroden-Separator-Verbunds 104 versetzt zueinander angeordnet, so dass der erste Längsrand 106a des Anodenstromkollektors 106 aus der ersten endständigen Stirnseite 104a und der erste Längsrand 109a des Kathodenstromkollektors 109 aus der zweiten endständigen Stirnseite 104b des Elektroden-Separator-Verbunds 104 austritt. Die versetzte Anordnung geht aus der Darstellung links unten hervor. Dort sind auch die zwei bandförmigen Separatoren 156 und 157 dargestellt, die im Wickel die Elektroden 105 und 108 voneinander trennen.

In der Darstellung rechts unten ist der Elektroden-Separator-Verbunds 104 in gewickelter Form dargestellt, wie er in einer Energiespeicherzelle gemäß einer der Figuren 1 bis 4 zum Einsatz kommen kann. Die aus den Stirnseiten 104a und 104b austretenden Elektrodenränder 106a und 109a sind gut zu erkennen. Der Wickelmantel 104c wird durch eine Kunststofffolie gebildet.

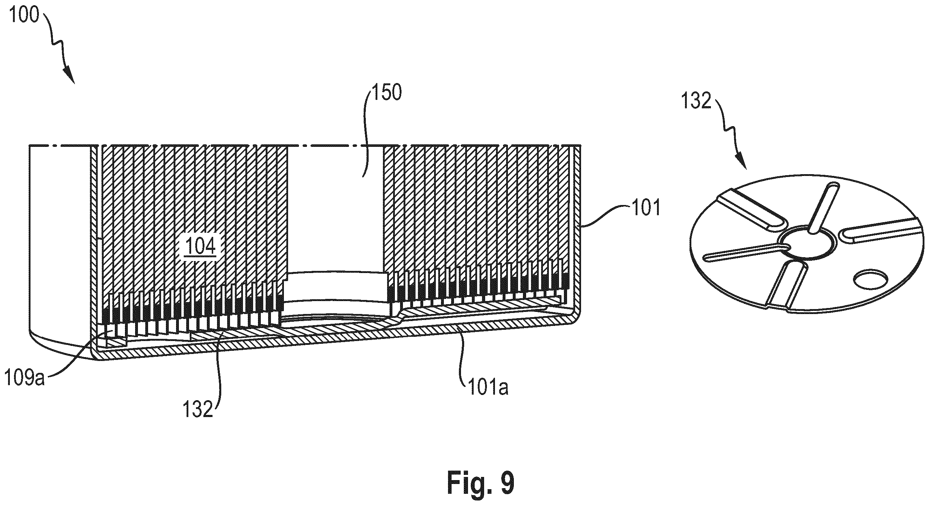

In **Fig. 9** ist der Bodenbereich einer bevorzugten Ausführungsform eine erfindungsgemäßen Energiespeicherzelle 100 dargestellt. In dem Gehäusebecher 101 ist der Elektroden-Separator-Verbund 104 angeordnet. Auf dem Boden 101a des Gehäusebechers sitzt das Kontaktblechteil 132 auf. Dessen Unterseite ist vorzugsweise durch Verschweißung mit dem Boden 101a verbunden. Die Verschweißung kann durch den Boden 101a hindurch mittels eines Lasers bewirkt werden. Alternativ kann beispielsweise auch mindestens eine Schweißelektrode durch den axialen Hohlraum 150 im Zentrum des Elektroden-Separator-Verbund 104 geführt werden. Eine Gegenelektrode kann auch an die Außenseite des Bodens 101a angepresst werden. Die Oberseite des Kontaktblechteils 132 steht in unmittelbarem Kontakt mit dem Längsrand 109a eines Anodenstromkollektors. Bevorzugt sind der Längsrand 109a und das Kontaktblechteil 132 ebenfalls durch Verschweißung verbunden.

Das Kontaktblechteil 132 ist separat dargestellt. Es weist wie das Kontaktblechteil 112 Sicken auf, um die Kontaktierung zu dem Längsrand 109a zu verbessern. Die schlitzförmigen Durchbrechungen dienen zur Entgasung sowie zur besseren Verteilung von Elektrolyt.

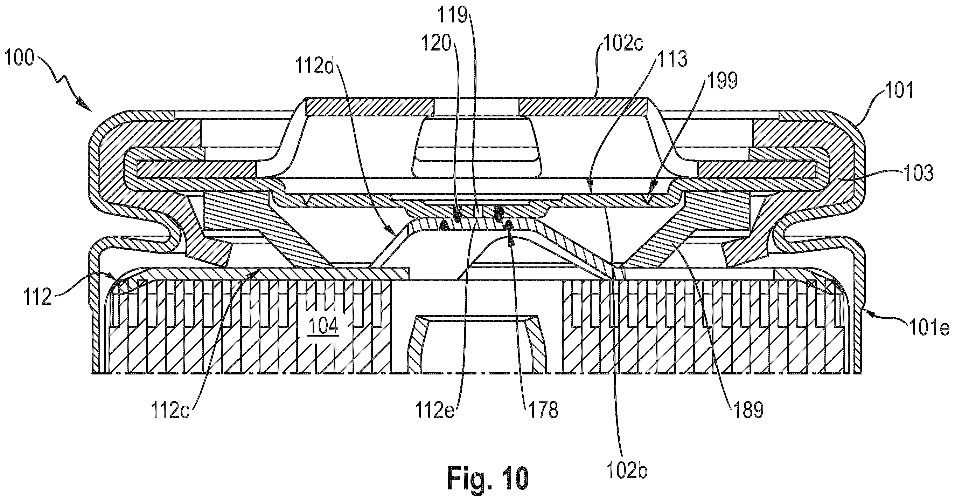

Die in **Fig. 10** dargestellte Ausführungsform einer erfindungsgemäßen Energiespeicherzelle unterscheidet sich von den in den Figuren 1 bis 4 dargestellten Energiespeicherzellen dadurch, dass das Kontaktblechteil 112 den Distanzausgleichsbereich 112d umfasst. Es umfasst weiterhin einen Verbindungsbereich 112e, der mit der Innenseite der Metallscheibe 113 verbunden ist. Die hier dargestellte Ausführungsform der Energiespeicherzelle umfasst also kein Distanzausgleichsblechteil, das auf ein Kontaktblechteil aufgeschweißt ist. Das Kontaktblechteil 112 erfüllt selbst die Funktion des Distanzausgleichsblechteils. Dies hat offensichtliche Vorteile. Eine elektrische Kontaktierung des Elektroden-Separator-Verbunds ist ausgehend von der Polkappe, die als Kontaktpol zum Abgreifen einer elektrischen Spannung der Energiespeicherzelle dienen kann, über lediglich zwei Metallteile realisiert, nämlich die Metallscheibe 113 und das Kontaktblechteil 112.

Das Kontaktblechteil 112 sitzt mit dem Kontaktierungsbereich 112c auf der oberen Stirnseite des als Wickel ausgebildeten Elektroden-Separator-Verbunds 104 auf und ist mit den an dieser Stirnseite austretenden Stromkollektoren verbunden, idealerweise durch Verschweißung. Das Kontaktblechteil 112 kann gleich oder ähnlich dem in Fig. 7 dargestellten Kontaktblechteil ausgebildet sein. Der Kontaktierungsbereich 112c umschließt den Distanzausgleichsbereich 112d, der sich aus der Ebene des Kontaktierungsbereichs 112c heraus domartig erhebt und bis hin zu dem Verbindungsbereich 112e erstreckt, der wiederum unmittelbar an dem Verbindungsbereich 113a der Metallscheibe 113 anliegt. Das Kontaktblechteil umfasst somit bevorzugt zwei Bereiche (den Kontaktierungsbereich 112c und den Verbindungsbereich 112e) in unterschiedlichen Ebenen, die axial voneinander beabstandet sind.

Die Metallscheibe 113 und das Kontaktblechteil 112 sind in den Verbindungsbereichen 112e und 113a miteinander verschweißt. Wie im Fall der Energiespeicherzelle gemäß Fig. 1 gewährleisten die Nuten 199 und 178 eine PRV- und eine CID-Funktion. Letztere wird durch den Stützring 189 unterstützt. Dieser sitzt auf dem Kontaktierungsbereich 112c auf und ist zwischen diesem und dem Randbereich der Metallscheibe 113 angeordnet. Wenn sich das Zentrum der Metallscheibe 113 in Folge eines auftretenden Drucks im Gehäuse nach oben wölbt, wird der Kontaktierungsbereich 112c durch den Stützring auf der Stirnseite des Wickels 104 fixiert und kann nicht angehoben werden. So ist gewährleistet, dass der Verbindungsbereich 112e bei ausreichendem Druck herausgesprengt werden kann, so dass der Stromfluss unterbrochen wird.

Erwähnenswert ist, dass die dargestellte Zelle einen Gehäusebecher 101 aufweist, der sich durch eine erhöhte Dicke im Verschlussabschnitt auszeichnet. Unterhalb des Übergangs 101e ist der Gehäusebecher dünner ausgebildet als oberhalb. Dies ist dadurch begründet, dass im Verschlussabschnitt - in Abhängigkeit von der Verschlusstechnik - in bestimmten Fällen eine höhere mechanische Festigkeit benötigt wird als im Zentralabschnitt. Dort kann Gehäusematerial gespart werden.

Die Metallscheibe 113 weist im Verbindungsbereich 113a ein Loch 119 auf, durch das ein Druckausgleich zwischen dem Gehäuseinneren und der Gehäuseumgebung erfolgen kann. Wie oben erläutert, kann dies bei der Herstellung der Schweißverbindung zwischen den Verbindungsbereichen hilfreich sein. Das Loch kann nach Herstellung der Schweißverbindung oder bei der Herstellung der Schweißverbindung verschlossen werden.

## Patentansprüche

1. Verfahren zur Herstellung eines Energiespeicherelements (100) mit den Schritten
a. Bereitstellen eines Elektroden-Separator-Verbunds (104) mit der Sequenz Anode (105) / Separator (156) / Kathode (108), der eine erste endständige Stirnseite (104a) und eine zweite endständige Stirnseite (104b) aufweist;
b. Aufbringen eines Kontaktblechteils (112) auf eine der Stirnseiten;
c. Gegebenenfalls
• Aufschweißen eines Distanzausgleichsblechteils (177) auf das Kontaktblechteil oder
• Fixieren eines Distanzausgleichsblechteils (177) auf dem Kontaktblechteil mittels Bildung einer alternativen stoffschlüssigen Verbindung oder einer formschlüssigen Verbindung;
d. Einbringen des Elektroden-Separator-Verbunds (104) in ein Gehäuseteil (101), das eine endständige kreisförmige Öffnung aufweist, insbesondere in einen metallischen Gehäusebecher;
e. Schließen der kreisförmigen Öffnung des Gehäuseteils (101) mittels eines Deckels (102) unter Ausbildung eines geschlossenen Gehäuses, wobei der Deckel (102) eine erste Seite (102b) aufweist, die nach dem Schließen ins Innere des Gehäuses weist, und eine zweite Seite (102c), die nach außen weist;
f. Anschweißen des Deckels (102) an das Kontaktblechteil (112) oder an das Distanzausgleichsblechteil (177);
**dadurch gekennzeichnet, dass**
g. der Deckel (102) mindestens ein Loch (119) aufweist, das beim Anschweißen des Deckels (102) einen Druckausgleich zwischen den beiden Seiten des Deckels (102) ermöglicht.

2. Verfahren nach Anspruch 1 mit dem folgenden zusätzlichen Merkmal:
a. Das mindestens eine Loch (119) wird beim Anschweißen des Deckels (102) verschlossen.

3. Verfahren nach Anspruch 1 oder nach Anspruch 2 mit mindestens einem der folgenden zusätzlichen Merkmale:
a. Der Deckel (102) wird mit Hilfe eines Lasers angeschweißt.
b. Das mindestens eine Loch (119) wird mittels eines Lasers, insbesondere mittels des Lasers, verschlossen.

4. Verfahren nach einem der vorhergehenden Ansprüche mit mindestens einem der folgenden zusätzlichen Merkmale:
a. Das geschlossene Gehäuse umschließt einen Innenraum, in dem der Elektroden-Separator-Verbund (104) angeordnet ist.
b. Der Deckel (102) umfasst eine Metallscheibe (113) mit einem kreisförmigen Rand, wobei die Metallscheibe (113) eine Innenseite aufweist, die den Innenraum begrenzt.
c. Die Metallscheibe (113) umfasst das mindestens eine Loch (119).

5. Verfahren nach Anspruch 4 mit einem der folgenden zusätzlichen Merkmale:
a. Das Kontaktblechteil (112) umfasst einen Verbindungsbereich (112e), in dem es mit der Innenseite der Metallscheibe (113) verbunden wird.
b. Das Distanzausgleichsblechteil (177) umfasst einen Verbindungsbereich (177b), in dem es mit der Innenseite der Metallscheibe (113) verbunden wird.

6. Verfahren nach Anspruch 5 mit mindestens einem der folgenden zusätzlichen Merkmale:
a. Die Metallscheibe (113) umfasst einen Verbindungsbereich (113a), in dem sie mit dem Verbindungsbereich (112e) oder dem Verbindungsbereich (177b) verschweißt wird.
b. Der Verbindungsbereich (113a) umfasst das mindestens eine Loch (119).

7. Verfahren nach einem der Ansprüche 5 oder 6 mit mindestens einem der folgenden zusätzlichen Merkmale:
a. Der Deckel (102) ist eine Deckelbaugruppe, die neben der Metallscheibe (113) eine Polkappe (117) umfasst, die mit der Metallscheibe (113) in elektrischem Kontakt steht.
b. Die Polkappe (117) sitzt unmittelbar auf der Metallscheibe (113) auf.
c. Die Polkappe (117) und die Metallscheibe (113) schließen einen Zwischenraum ein.
d. Die Polkappe (117) umfasst mindestens eine Durchbrechung (117a), durch welche der Verbindungsbereich (113a) von außerhalb des Gehäuses zugänglich ist, insbesondere für einen Laser von außerhalb des Gehäuses zugänglich ist.

8. Energiespeicherelement (100) mit den folgenden Merkmalen, hergestellt nach einem Verfahren nach einem der vorhergehenden Ansprüche, **gekennzeichnet durch** die folgenden Merkmale:
a. Das Energiespeicherelement umfasst einen Elektroden-Separator-Verbund (104) mit der Sequenz Anode (105) / Separator (156) / Kathode (108),
b. der Elektroden-Separator-Verbund (104) liegt in Form eines zylindrischen Wickels mit einer ersten endständigen Stirnseite (104a) und einer zweiten endständigen Stirnseite (104b) und einem dazwischen liegenden Wickelmantel (104c) vor,
c. die Anode (105) des Elektroden-Separator-Verbunds (104) umfasst einen Anodenstromkollektor (106), der einen ersten Längsrand (106a) und einen dazu parallelen zweiten Längsrand aufweist und einen Hauptbereich, der mit einer Schicht (107) aus negativem Elektrodenmaterial beladen ist, sowie einen freien Randstreifen, der sich entlang seines ersten Längsrands (106a) erstreckt und der nicht mit dem negativen Elektrodenmaterial beladen ist,
d. die Kathode (108) des Elektroden-Separator-Verbunds (104) umfasst einen Kathodenstromkollektor (109), der einen ersten Längsrand (109a) und einen dazu parallelen zweiten Längsrand aufweist und einen Hauptbereich, der mit einer Schicht aus positivem Elektrodenmaterial (110) beladen ist, sowie einen freien Randstreifen, der sich entlang seines ersten Längsrands (109a) erstreckt und der nicht mit dem Elektrodenmaterial (110) beladen ist,
e. die Anode (105) und die Kathode (108) sind innerhalb des Elektroden-Separator-Verbunds (104) derart angeordnet, dass der erste Längsrand (106a) des Anodenstromkollektors (106) aus der ersten endständigen Stirnseite (104a) und der erste Längsrand (109a) des Kathodenstromkollektors (108) aus der zweiten endständigen Stirnseite (104b) des Elektroden-Separator-Verbunds (104) austritt,
f. das Energiespeicherelement umfasst ein Kontaktblechteil (112), das auf dem ersten Längsrand (106a) des Anodenstromkollektors (106) aufsitzt und die erste endständige Stirnseite (104a) abdeckt oder auf dem ersten Längsrand (109a) des Kathodenstromkollektors (109) aufsitzt und die zweite endständige Stirnseite (104b) abdeckt und mit diesem verbunden ist,
g. das Energiespeicherelement umfasst ein luft- und flüssigkeitsdicht verschlossenes Gehäuse, das einen metallischen Gehäusebecher (101) mit einer endständigen kreisförmigen Öffnung und einen Deckel (102) mit einem kreisförmigen Rand (102a), welcher die kreisförmige Öffnung verschließt, umfasst, und das einen Innenraum umschließt, in dem der Elektroden-Separator-Verbund (104) angeordnet ist,
h. der Deckel (102) umfasst eine Metallscheibe (113) mit einem kreisförmigen Rand, wobei die Metallscheibe (113) eine Innenseite aufweist, die den Innenraum begrenzt, und eine gegenüberliegende Außenseite,
i. entweder umfasst das Kontaktblechteil (112) einen Distanzausgleichsbereich (112d), der in einem Verbindungsbereich (112e) mit der Innenseite der Metallscheibe (113) verbunden ist, oder es ist ein Distanzausgleichsblechteil (177) auf das Kontaktblechteil (112) aufgeschweißt, wobei das Distanzausgleichsblechteil (177) einen Distanzausgleichsbereich (177a) umfasst, der in einem Verbindungsbereich (177b) mit der Innenseite der Metallscheibe (113) verbunden ist.
j. Die Metallscheibe (113) umfasst einen Verbindungsbereich (113a), in dem sie mit dem Verbindungsbereich (112e) oder dem Verbindungsbereich (177b) verschweißt ist.
k. In dem Verbindungsbereich (113a) findet sich im Bereich der Verschweißung weist die Metallscheibe (113) ein Vertiefung oder eine Dickenschwächung auf.

9. Deckelbaugruppe (112) zur Herstellung eines Energiespeicherelements gemäß einem der vorhergehenden Ansprüche mit den folgenden Merkmalen:
a. Die Deckelbaugruppe umfasst eine Metallscheibe (113) und eine Polkappe (117), die in elektrischem sowie in unmittelbarem mechanischem Kontakt miteinander stehen.
b. Die Polkappe (117) sitzt unmittelbar auf der Metallscheibe (113) auf.
c. Die Polkappe (117) und die Metallscheibe (113) schließen einen Zwischenraum ein.
d. Die Polkappe (117) umfasst mindestens eine Durchbrechung (117a), durch welche der Verbindungsbereich (113a) von außerhalb des Gehäuses zugänglich ist, insbesondere für einen Laser von außerhalb des Gehäuses zugänglich ist.
e. Die Deckelbaugruppe umfasst eine Dichtung (103), die auf ihren Rand aufgezogen ist.
f. Der Verbindungsbereich (113a) umfasst mindestens ein Loch (119).

10. Deckelbaugruppe nach Anspruch 9 mit dem folgenden zusätzlichen Merkmal:
a. Das mindestens eine Loch (119) ist oder umfasst ein Loch mit einem minimalen Durchmesser von 0,01 mm und einem maximalen Durchmesser von 1 mm.
